# EUROPEAN PATENT APPLICATION

(11) **EP 2 878 237 A1**
(43) Date of publication of application: **03.06.2015**
(21) Application number: 13822694.9
(22) Date of filing: 30.05.2013
(51) Int. Cl.: A47J 19/00, A47J 42/16, A47J 43/044, A47J 43/046, B02C 7/13, B02C 7/14

(54) **METHOD FOR OPERATING FOOD MILL**

(30) Priority: 24.07.2012 JP 2012163552
(71) Applicant: Nepuree Corporation, Tokyo 104-0031 (JP)
(72) Inventor: TANIWAKI, Ken, Tokyo 104-0031 (JP); YAMASHITA, Masateru, Tokyo 104-0031 (JP); KANO, Tsutomu, Tokyo 104-0031 (JP); KATO, Hitoshi, Tsukuba-shi Ibaraki 305-8666 (JP)
(74) Representative: Schön, Christoph
(86) International application number: PCT/JP2013/065099
(87) International publication number: WO 2014/017168

(57) **Abstract**

[Problem to be solved]

To provide a method for operating a food mill and an automatic food milling apparatus suitable for various foodstuffs heated and softened using superheated vapor are milled by passing the foodstuffs through a strainer while maximally suppressing destruction of cells of the foodstuffs, to continuously manufacture puree with original colors, odors, tastes, and nutritional values kept unchanged.

[Solution]

A rotation speed difference between a upper mortar and a lower mortar is used to crush and ground ingredient foodstuffs by a shearing force between the upper mortar and the lower mortar, and a conical recessed surface of the lower mortar is utilized to separate the crushed ingredient foodstuffs into filtered foodstuffs and residues by a centrifugal force resulting from rotation of the lower mortar so that the filtered foodstuffs and the residues are collected in a filtered foodstuff collection unit and a residue collection unit, respectively.

## Description

### Technical Field

The present invention relates to a method for operating a food mill and an automatic food milling apparatus which are suitable, for example, for a case where various foodstuffs (for example, vegetables, fruits, or grains) heated and softened using superheated vapor are passed through a strainer where the foodstuffs are milled into puree.

### Background Art

Nepuree Corporation, the applicant of the present application, has proposed a novel method for manufacturing puree in which various foodstuffs (for example, vegetables, fruits, or grains) heated and softened in a superheated vapor (for example, superheated steam at 120 to 500°C) atmosphere in a short time (for example, 30 to 240 seconds) are passed through a strainer (hereinafter, called also "screen") where the foodstuffs are milled into puree (see Patent Literature 1).

In the novel method for manufacturing puree, before a food milling process, the foodstuffs are heated and softened in superheated vapor at high temperature in an anoxic state in a short time. Thus, unlike a normal method of manufacturing puree by simmering foodstuffs for a long time to heat and soften the foodstuffs before a food milling process, the novel method allows maximum suppression of oxidization of the foodstuffs and destruction of cells of the foodstuffs during the heating and softening process. Moreover, even in the food milling process, the heated and softened foodstuffs are directly pressed against and passed through the strainer while being maximally prevented from being crushed. Thus, in the final puree, most of the cells remain unchanged with the cell membranes thereof undestroyed, and suffer little alteration caused by oxidization. The original colors, odors, tastes, and nutritional values of the foodstuffs are kept unchanged. Furthermore, some of the foodstuffs advantageously exert characteristic supplemental effects (an immunostimulating effect, an immunobalance suppression effect, a tea leaf nutritional-value enhancing effect, and a soybean nutritional-effect enhancing effect) (see Patent Literatures 2 to 5).

As food milling apparatuses used for such a method for manufacturing puree, a first conventional apparatus (see Patent Literatures 1 and 6), a second conventional apparatus (see Patent Literature 7), and the like are known. The first conventional apparatus includes a plurality of cylindrical containers which rotate around an inclined axis of rotation while revolving around a vertical axis of revolution and inside each of which a bottomed cylindrical strainer having a smaller radius than the container is disposed, and mills softened foodstuffs placed in the bottomed cylindrical strainer by pressing and passing the foodstuffs against and through a circumferential wall of the cylindrical strainer under the composite centrifugal force of revolution and rotation. In the second food milling apparatus, top inlets of similar cylindrical containers are integrated together and bottom outlets of the containers are in communication with one another through an annular product receiving unit so that softened foodstuffs are continuously fed from the top to the inside of the containers while filtered foodstuffs (puree) and residues are separately and continuously discharged from the bottoms to the outside of the containers.

Furthermore, in general, as an apparatus that continuously separates a solid-liquid mixed ingredient with a mixture of solids and liquids into the solids and the liquids, a third conventional apparatus (see Patent Literature 8) is known. In the third conventional apparatus, a strainer (screen) shaped to have a conic recessed surface is rotated around a vertical central axis with the recessed surface facing upward to allow the liquids to be passed (transmitted) through an inclined surface of the strainer by a centrifugal force, whereas the solids are raised along the conical inclined surface of the strainer by a centrifugal force while overflowing the strainer through an upper-end peripheral edge thereof (the solids are flung away by the centrifugal force).

Moreover, in the field of flour mills, a fourth conventional apparatus (see Patent Literature 9) is known. In the fourth conventional apparatus, a lower mortar with a scrubbing surface shaped into a conical protruding surface and an upper mortar with a scrubbing surface shaped into a conical recessed surface are disposed coaxially and opposing each other in a vertical direction, and rotated relative to each other so as to crush kernels in the gap between the upper and lower mortars.

### Citation List

### Patent Literature

Patent Literature 1: Japanese Patent Laid-Open No. 2009-178168
Patent Literature 2: International Publication No. WO 2009/154051
Patent Literature 3: International Publication No. WO 2011/016432
Patent Literature 4: Japanese Patent Laid-Open No. 2011-217641
Patent Literature 5: Japanese Patent Laid-Open No. 2011-217642
Patent Literature 6: Japanese Patent Laid-Open No. 2001-299191
Patent Literature 7: Japanese Patent Laid-Open No. 2010-179265
Patent Literature 8: Japanese Patent Laid-Open No. 2003-071322
Patent Literature 9: Japanese Patent Laid-Open No. 2009-248072

### Summary of Invention

### Technical Problem

The first and second conventional apparatuses are originally designed to crush and mix a plurality of foodstuffs together and may thus be suitable for manufacturing puree, which is a mixture of a plurality of foodstuffs. However, a complicated supply and discharge mechanism needs to be adopted in order to continuously perform the supply of softened foodstuffs to and the discharge of filtered foodstuffs and residues from the containers, which rotate while maintaining revolution. The apparatuses are thus inevitably expensive. In addition, a foodstuff pressing force needed to pass the foodstuffs through the strainer depends on the complicated composite centrifugal force of revolution and rotation, and is thus adjusted by changing both the numbers of rotations and revolutions. It is not necessarily easy to obtain a foodstuff pressing force optimum for passage through the strainer in accordance with the nature of softened foodstuffs (density, hardness, size, fiber content, water content, and the like).

The third conventional apparatus is relatively effective for solid-liquid mixed ingredients in which solids are clearly separated from liquids or in which the amount of liquids is sufficiently larger than the amount of solids, because of a solid-liquid separation principle in which the liquids are passed through the strainer by the centrifugal force, whereas the solids are raised along the conical inclined surface of the strainer by the centrifugal force while overflowing the strainer through the upper-end peripheral portion thereof. However, the third conventional apparatus is not necessarily suitable for applications where solids and liquids are separated from a solid-liquid mixed ingredient such as foodstuffs softened using superheated vapor, in which the solids are relatively firmly bound to the liquids or are not clearly separated from the liquids.

It is understood from the fourth conventional apparatus that the lower mortar with the scrubbing surface shaped into the conical protruding surface and the upper mortar with the scrubbing surface shaped into the conical recessed surface are disposed coaxially and opposite to each other in the vertical direction and that the lower mortar and the upper mortar are rotated relative to each other, while the kernels are crushed in the gap between the upper and lower mortars. However, the application of the fourth conventional apparatus is limited to food milling of dry granular materials such as kernels. It does not describe or suggest an application where a solid-liquid mixed ingredient is separated into solids and liquids. Moreover, there are cases where the recess and protrusion relation of the fourth conventional apparatus is reverse to the recess and protrusion relation of the third conventional apparatus. Thus, a factor is inevitably present which hinders coupling of the fourth conventional fourth apparatus to the third conventional apparatus.

Thus, the inventors has proposed, in Japanese Patent Application No. 2012-108210 (filed on May 10, 2013), a food mill of a novel structure with a lower mortar which is supported so as to be rotatable around a conical central axis in both a forward direction and a backward direction with a conical recessed surface thereof facing upward, the conical recessed surface serving as a filtration surface, and an upper mortar which is supported so as to be rotatable around a conical central axis in both the forward direction and the backward direction with a conical protruding surface thereof facing downward, the conical protruding surface serving as a pressing surface, in which the lower mortar and the upper mortar are supported such that the conical recessed surface and the conical protruding surface lie opposing each other in a vertical direction via a gap with the conical central axes of the lower and upper mortars coaxially aligned with each other and such that the lower mortar and the upper mortar freely approach and leave each other so as to contract or enlarge the gap.

The food mill allows various operation methods to be adopted in accordance with the nature of softened foodstuffs (density, hardness, size, fiber content, water content, the presence or absence of seeds or coats, and the like), based on a selective combination of the rotational behavior of the upper mortar, the rotational behavior of the lower mortar, and the gap between the upper and lower mortars.

An object of the present invention is to provide a suitable method for operating a food mill having the above-described novel configuration and an automatic food milling apparatus which adopts the method.

The other objects and effects of the present invention will be easily understood by those skilled in the art with reference to the following description of the specification. Solution to Problem

### [Basic Configuration of the Operation Method]

The above-described technical object may be accomplished by a method for operating a food mill having a basic configuration described below. The operation method is based on the presence of the food mill with the novel structure previously proposed by the inventors. That is, the food mill includes a lower mortar which is supported so as to be rotatable around a conical central axis in both a forward direction and a backward direction with a conical recessed surface (including a truncated cone-like recessed surface) thereof facing upward, the conical recessed surface serving as a filtration surface, and an upper mortar which is supported so as to be rotatable around a conical central axis in both the forward direction and the backward direction with a conical protruding surface thereof facing downward, the conical protruding surface serving as a pressing surface. The lower mortar and the upper mortar are supported such that the conical recessed surface and the conical protruding surface lie opposing each other in a vertical direction via a gap with the conical central axes of the lower and upper mortars coaxially aligned with each other and such that the lower mortar and the upper mortar freely approach and leave each other so as to contract or enlarge the gap. The food mill further includes a foodstuff supply passage through which ingredient foodstuffs are fed to the gap between the conical recessed surface of the lower mortar and the conical protruding surface of the upper mortar, a filtered foodstuff collection unit which collects filtered foodstuffs passing through the conical recessed surface of the lower mortar, and a residue collection unit which collects residues rising along the conical recessed surface of the lower mortar and overflowing the conical recessed surface through an upper-end periphery thereof.

The operation method is characterized by including causing a difference in rotation speed between the upper mortar and the lower mortar to allow ingredient foodstuffs to be crushed or ground by a shearing force generated between the upper mortar and the lower mortar, and utilizing the conical recessed surface of the lower mortar to allow the crushed ingredient foodstuffs to be separated into filtered foodstuffs and residues by a centrifugal force resulting from rotation of the lower mortar so that the filtered foodstuffs and the residues are collected in the filtered foodstuff collection unit and the residue collection unit, respectively.

The expression "difference in rotation speed between the upper mortar and the lower mortar" as used herein is appropriately set in accordance with the nature of the ingredient foodstuffs (for example, density, hardness, water content, viscosity, and the amount of seeds or coats), the radius of the upper and lower mortars, and the like because the difference impacts a shearing force acting on the ingredient foodstuffs present between the upper mortar and the lower mortar. The magnitude of the difference in rotation speed may be constant or may vary over time.

Furthermore, the centrifugal force attributed to the rotation speed of the lower mortar impacts the solid-liquid separation effect of the lower mortar, and thus, the rotation speed is determined taking into account the nature of the ingredient foodstuffs, the rate at which the filtered foodstuffs (puree) are extracted, the rate at which the residues are discharged, and the like. When the residues are intended to be continuously discharged, a given rotation speed or higher is needed due to the need for the centrifugal force.

Moreover, the relation between the rotation speed of the lower mortar and the difference in rotation speed between the upper and lower mortars may be set to any value in accordance with the nature of the ingredient foodstuffs (for example, density, hardness, water content, viscosity, and the amount of seeds or coats), the radius of the upper and lower mortars, and the like.

### [Effects of the Basic Configuration of the Operation Method]

In such a configuration, supplied ingredient foodstuffs (for example, foodstuffs heated and softened using superheated vapor) are pushed into the gap between the upper mortar and the lower mortar in such a manner as to be sucked into the gap. The ingredient foodstuffs are then crushed and ground by a shearing force which depends on the difference in speed between the upper and lower mortars, while being separated into filtered foodstuffs (puree) and residues (including coats and seeds) by the solid-liquid separation effect of the lower mortar resulting from a centrifugal force which depends on the rotation speed of the lower mortar. Finally, the filtered foodstuffs and the residues are guided into the filtered foodstuff collection unit and the residue collection unit, respectively. At this time, variation which depends on the nature of the ingredient foodstuffs (for example, density, hardness, water content, viscosity, and the amount of seeds or coats) is absorbed to some degree by adjusting the difference in speed between the upper and lower mortars or the rotation speed of the lower mortar. Thus, high-quality filtered foodstuffs (puree) can be stably manufactured from ingredient foodstuffs with various types of nature.

### [Embodiment 1 of the Operation Method]

In the basic aspect of the operation method, the difference in rotation speed may be periodically changed. The expression "periodic change" as used herein may be, for example, changes according to a sine wave, a square wave, or a sawtooth wave.

In such a configuration, the intensity of the shearing force applied to the ingredient foodstuffs present between the upper and lower mortars varies periodically. Thus, compared to a configuration in which the intensity of the shearing force is maintained constant, the above-described configuration advantageously smoothly crushes and grinds the ingredient foodstuffs (which normally have uneven shapes and lump sizes) between the upper and lower mortars, leading to the unlikelihood of blockage state with the foodstuffs.

### [Embodiment 2 of the Operation Method]

In Embodiment 1, the periodic change in rotation speed may be effected within a given range around a zero difference in rotation speed between the upper and lower mortars, in both a forward direction and a backward direction. In this case, the expression "effected within a given range around a zero difference in rotation speed between the upper and lower mortars, in both a forward direction and a backward direction" means that, for example, when the rotation speed of the lower mortar is denoted by N, the rotation speed of the upper mortar changes, for example, like a sine wave within the range of N ± ΔN (deviation is denoted by ΔN).

In such a configuration, filtration through-holes arranged, on the lower mortar, for example, in a radial manner, are periodically equally scrubbed in both the forward and backward directions. Thus, compared to a configuration in which the through-holes are scrubbed in one direction, the above-described configuration advantageously restrains each of the filtration through-holes from being clogged with residues.

### [Embodiment 3 of the Operation Method]

In the basic configuration of the operation method and each of the embodiments described above, pulsed rotation unevenness may be applied to rotation of the lower mortar and/or the upper mortar. In this case, the "pulsed rotation unevenness" refers to an instantaneous increase or decrease in rotation speed.

In such a configuration, even if the ingredient foodstuffs temporarily block the gap between the upper and lower mortars, such a block state is automatically eliminated by periodic vibration or impact resulting from the pulsed rotation unevenness. Thus, a smooth crushing effect or solid-liquid separation effect can constantly be maintained.

### [Embodiment 4 of the Operation Method]

In the basic configuration of the operation method and each of the embodiments described above, the gap between the upper and lower mortars may be periodically changed. The expression "periodic change" as used herein may be, for example, changes according to a sine wave or a sawtooth wave.

In such a configuration, when the gap between the upper and lower mortars is enlarged, the ingredient foodstuffs are actively pushed into the gap between the upper and lower mortars, with the residues discharged at the same time. On the other hand, when the gap between the upper and lower mortars is contracted, the upper mortar lowers to make the crushing of the ingredient foodstuffs between the upper and lower mortars progress. Thus, the above-described crushing effect and solid-liquid separation effect are combined together to improve the production efficiency for the filtered foodstuffs (puree).

### [Embodiment 5 of the Operation Method]

In the basic configuration of the operation method and each of the embodiments described above, the gap between the upper and lower mortars may be changed in accordance with a rotational load on the lower mortar or the upper mortar. The expression "changed in accordance with a rotational load" means that, for example, the gap is enlarged when the rotational load increases, and contracted when the rotational load decreases.

In such a configuration, for ingredient foodstuffs (for example, foodstuffs such as fruits which contain a large amount of moisture) which are characterized to be reduced in volume as the crushing progresses between the upper and lower mortars, thus decreasing the rotational load on the upper mortar, the gap between the upper and lower mortars is gradually contracted to allow avoidance of extreme idle running of the upper mortar or adjustment of the load on the upper mortar to a value appropriate to the crushing. For ingredient foodstuffs (for example, hard foodstuffs such as root vegetables) which are characterized to extremely increase the rotational load on the upper mortar when pushed into the gap between the upper and lower mortars, the gap between the upper and lower mortars is gradually enlarged to allow avoidance of a situation where a driving motor for the upper mortar is overloaded or adjustment of the load on the upper mortar to a value appropriate to the crushing.

### [Embodiment 6 of the Operation Method]

In the basic configuration of the operation method and each of the embodiments described above, the rotation speed of the lower mortar or the upper mortar may be changed in accordance with the rotational load on the lower mortar or the upper mortar. The expression "changed in accordance with the rotational load" means that, for example, when the rotational load on the upper mortar or the lower mortar increases, the rotation speed of the upper mortar or lower mortar itself is reduced.

In such a configuration, for ingredient foodstuffs (for example, hard foodstuffs such as root vegetables) which are characterized to extremely increase the rotational load on the upper mortar when pushed into the gap between the upper and lower mortars, the gap between the upper and lower mortars is gradually enlarged to allow avoidance of a situation where the driving motor for the upper mortar or the lower mortar is overloaded or adjustment of the load on the upper mortar to a value appropriate to the crushing.

### [Basic Configuration of the Automatic Food Milling Apparatus]

An automatic food milling apparatus may be provided by configuring a control unit and a driving unit so that the above-described operation method is automatically executed. That is, the automatic food milling apparatus includes a lower mortar which is supported so as to be rotatable around a conical central axis in both a forward direction and a backward direction with a conical recessed surface thereof facing upward, the conical recessed surface serving as a filtration surface, and an upper mortar which is supported so as to be rotatable around a conical central axis in both the forward direction and the backward direction with a conical protruding surface thereof facing downward, the conical protruding surface serving as a pressing surface. The lower mortar and the upper mortar are supported such that the conical recessed surface and the conical protruding surface lie opposite each other in a vertical direction via a gap with the conical central axes of the lower and upper mortars coaxially aligned with each other and such that the lower mortar and the upper mortar freely approach and leave each other so as to contract or enlarge the gap. The automatic food milling apparatus further includes a foodstuff supply passage through which ingredient foodstuffs are fed to the gap between the conical recessed surface of the lower mortar and the conical protruding surface of the upper mortar, a filtered foodstuff collection unit which collects filtered foodstuffs passing through the conical recessed surface of the lower mortar, a residue collection unit which collects residues rising along the conical recessed surface of the lower mortar and overflowing the conical recessed surface through an upper-end periphery thereof, a driving mechanism which includes at least one or two driving sources and which drives rotational movement of the lower mortar, rotational movement of the upper mortar, and approaching and leaving movements of the upper and lower mortars across the gap, an operation unit, and a control unit which controls the driving mechanism in response to a predetermined operation performed via the operation unit. The control unit incorporates a control function to control the driving mechanism to adjust rotation of the lower mortar and the upper mortar and the gap between the upper and lower mortars to a rotating direction, a rotation speed, and the gap specified by a predetermined operation performed via the operation unit.

A specific configuration of the "driving mechanism" may include at least one or two servo motors which serve as driving sources and a power transmission mechanism which coverts power obtained from the servo motors into rotational movement of the upper mortar, rotational movement of the lower mortar, and approaching and leaving movements of the upper and lower mortars across the gap and transmits the resultant movements. In this regard, the control is of course facilitated by associating the three movements with the different servo motors and power transmission mechanisms.

Furthermore, a specific configuration of the "control unit" may include, as is well known by those skilled in the art, an arithmetic processing unit which recognizes a target rotating direction and a target rotation speed for the upper mortar, a target rotating direction and a target rotation speed for the lower mortar, and a target gap between the upper and lower mortars all of which are specified by a predetermined operation performed via the operation unit by an operator, the arithmetic processing unit calculating command values needed to control the servo motors in association with the target values, and a servo driver (hereinafter also referred to as a servo amplifier) which controls each of the servo motors based on the command values provided by the arithmetic processing unit.

Specifically, an arithmetic control unit may be configured, as is well known by those skilled in the art, using a personal computer (PC) incorporating target control functions in a PC language such as a C language or a programmable controller (PLC) incorporating target control functions in a PLC language such as a ladder diagram language. When the arithmetic control unit is configured using a PC, a keyboard, a mouse, a display, and the like provided in the PC may be directly utilized as the operation unit. When the arithmetic control unit is configured using the PLC, a programmable terminal (PT) of a touch panel configuration normally incorporated in the PLC system may be utilized as the operation unit.

### [Effects of the Basic Configuration of the Automatic Food Milling Apparatus]

In such a configuration, when the predetermined operation is performed via the operation unit to specify the target rotating direction and the target rotation speed for the upper mortar, the target rotating direction and the target rotation speed for the lower mortar, and the target gap between the upper and lower mortars, the control unit operates to activate the driving mechanism to automatically set the rotating direction and rotation speed of the upper mortar, the rotating direction and rotation speed of the lower mortar, and the gap between the upper and lower mortars to the respective specified contents. Thus, such a function is utilized to execute the following process. A difference is caused in rotation speed between the upper and lower mortars to allow the ingredient foodstuffs to be crushed and ground by a shearing force generated between the upper and lower mortars, and the conical recessed surface of the lower mortar is utilized to allow the crushed ingredient foodstuffs to be separated into filtered foodstuffs and residues by a centrifugal force resulting from rotation of the lower mortar so that the filtered foodstuffs and the residues can be collected in the filtered foodstuff collection unit and the residue collection unit, respectively.

Moreover, in the automatic food milling apparatus, the rotational behaviors of the upper and lower mortars and the gap between the upper and lower mortars can be optionally set, and thus, attempts may be freely made to perform various operation aspects, such as an operation of keeping one of the upper and lower mortars stationary, while rotating only the other mortar, an operation of rotating the upper mortar and the lower mortar in the opposite directions, an operation of increasing the rotation speed of one or both of the upper and lower mortars to a maximum speed, an operation of gradually increasing the difference in speed between the upper and lower mortars from zero, and an operation of gradually increasing the gap between the upper and lower mortars from zero. This can be utilized to easily perform, for example, a tuning operation for finding an optimum operation state and an operation dealing with blockage of the gap between the upper and lower mortars with the ingredient foodstuffs or clogging of the filtration holes.

### [Embodiment 1 of the Automatic Food Milling Apparatus]

In the above-described basic configuration of the automatic food milling apparatus, the control unit may further incorporate a function to control the driving mechanism so as to periodically change the difference in rotation speed between the upper and lower mortars. The expression "periodic change" as used herein may be, for example, changes according to a sine wave, a square wave, or a sawtooth wave.

In such a configuration, the intensity of the shearing force applied to the ingredient foodstuffs present between the upper and lower mortars is periodically varied simply by performing predetermined function selection operations via the operation unit. Thus, compared to a configuration in which the intensity of the shearing force is maintained constant, the above-described configuration advantageously smoothly crushes and grinds the ingredient foodstuffs (which normally have uneven shapes and lump sizes) between the upper and lower mortars, leading to the unlikelihood of blockage state with the foodstuffs.

### [Embodiment 2 of the Automatic Food Milling Apparatus]

In Embodiment 1 of the automatic food milling apparatus described above, the change in difference in rotation speed may occur within a given range around a zero difference in rotation speed between the upper and lower mortars, in both a forward direction and a backward direction. In this case, the expression "occur within a given range around a zero difference in rotation speed between the upper and lower mortars, in both a forward direction and a backward direction" means that, for example, when the rotation speed of the lower mortar is denoted by N, the rotation speed of the upper mortar changes, for example, like a sine wave within the range of N ± ΔN (deviation is denoted by ΔN).

In such a configuration, filtration through-holes, for example, radially arranged on the lower mortar are periodically equally scrubbed in both the forward and backward directions simply by performing predetermined function selection operations via the operation unit. Thus, compared to a configuration in which the through-holes are scrubbed in one direction, the above-described configuration advantageously restrains each of the filtration through-holes from being clogged with residues.

### [Embodiment 3 of the Automatic Food Milling Apparatus]

In the basic configuration of the automatic food milling apparatus and each of the embodiments described above, the control unit may further incorporate a control function which controls the driving mechanism so as to cause rotation unevenness in the rotations of the lower mortar and/or the upper mortar. In this case, the "pulsed rotation unevenness" refers to an instantaneous increase or decrease in rotation speed.

In such a configuration, the pulsed rotation unevenness can be applied to the rotations of the lower mortar and/or upper mortar simply by performing a predetermined function selection operation via the operation unit. Thus, even if the ingredient foodstuffs temporarily block the gap between the upper and lower mortars, such a block state is automatically eliminated by periodic vibration or impact resulting from the pulsed rotation unevenness. Consequently, a smooth crushing effect or solid-liquid separation effect can constantly be maintained.

### [Embodiment 4 of the Automatic Food Milling Apparatus]

In the basic configuration of the automatic food milling apparatus and each of the embodiments described above, the control unit may further incorporate a function to control the driving mechanism so as to periodically change the gap between the upper and lower mortars may be periodically changed. The expression "periodic change" as used herein may be, for example, changes according to a sine wave, a square wave or a sawtooth wave.

In such a configuration, the gap between the upper and lower mortars can be periodically changed simply by performing a predetermined function selection operation via the operation unit. Thus, when the gap between the upper and lower mortars is enlarged, the ingredient foodstuffs are actively pushed into the gap between the upper and lower mortars, with the residues discharged at the same time. On the other hand, when the gap between the upper and lower mortars is contracted, the upper mortar lowers to make the crushing of the ingredient foodstuffs between the upper and lower mortars progress. Consequently, the above-described crushing effect and solid-liquid separation effect are combined together to improve the production efficiency for the filtered foodstuffs (puree).

### [Embodiment 5 of the Automatic Food Milling Apparatus]

In the basic configuration of the automatic food milling apparatus and each of the embodiments described above, the control unit may further incorporate a function to control the driving mechanism so as to change the gap between the upper and lower mortars in accordance with a rotational load on the lower mortar and/or the upper mortar. The expression "changed in accordance with a rotational load" means that, for example, the gap is enlarged when the rotational load increases, and contracted when the rotational load decreases.

In such a configuration, the gap between the upper and lower mortars can be changed in accordance with the rotational load on the lower mortar and/or the upper mortar simply by performing a predetermined function selection operation via the operation unit. Thus, for ingredient foodstuffs (for example, foodstuffs such as fruits which contain a large amount of moisture) which are characterized to be reduced in volume as the crushing progresses between the upper and lower mortars, thus decreasing the rotational load on the upper mortar, the gap between the upper and lower mortars is gradually contracted to allow avoidance of extreme idle running of the upper mortar or adjustment of the load on the upper mortar to a value appropriate to the crushing. For ingredient foodstuffs (for example, hard foodstuffs such as root vegetables) which are characterized to extremely increase the rotational load on the upper mortar when pushed into the gap between the upper and lower mortars, the gap between the upper and lower mortars is gradually enlarged to allow avoidance of a situation where a driving motor for the upper mortar is overloaded or adjustment of the load on the upper mortar to a value appropriate to the crushing.

### [Embodiment 6 of the Automatic Operation Method]

In the basic configuration of the automatic food milling apparatus and each of the embodiments described above, the control unit may further incorporate a function to control the driving mechanism so as to change the rotation speed of the lower mortar and/or the upper mortar in accordance with the rotational load on the lower mortar and/or the upper mortar. The expression "changed in accordance with the rotational load" means that, for example, when the rotational load on the upper mortar or the lower mortar increases, the rotation speed of the upper mortar or lower mortar itself is reduced.

In such a configuration, the rotation speed of the lower mortar and/or the upper mortar can be changed in accordance with the rotational load on the lower mortar and/or the upper mortar simply by performing a predetermined function selection operation via the operation unit. Thus, for ingredient foodstuffs (for example, hard foodstuffs such as root vegetables) which are characterized to extremely increase the rotational load on the upper mortar when pushed into the gap between the upper and lower mortars, the gap between the upper and lower mortars is gradually enlarged to allow avoidance of a situation where the driving motor for the upper mortar is overloaded or adjustment of the load on the upper mortar to a value appropriate to the crushing.

### [Embodiment 7 of the Automatic Operation Method]

In the basic configuration of the automatic food milling apparatus and each of the embodiments described above, the control unit may further incorporate a function to automatically specify the number of rotations for the upper mortar in response to an operation of specifying the number of rotations for the lower mortar via the operation unit, so as to maintain a predefined correlation between a rotational behavior of the lower mortar and a rotational behavior of the upper mortar.

In such a configuration, with the relative relation between the rotational behavior of the lower mortar and the rotational behavior of the upper mortar maintained, tuning to an optimum solid-liquid separation point can be achieved while the magnitude of a centrifugal force resulting from the rotation of the lower mortar is separately exclusively adjusted. In this regard, when the predefined correlation is a constant difference in rotation speed between the lower mortar and the upper mortar, the solid-liquid separation effect can be exclusively appropriately adjusted with the degree of grinding of the foodstuffs maintained.

### [Embodiment 8 of the Automatic Food Milling Apparatus]

In the basic configuration of the automatic food milling apparatus and each of the embodiments described above, the control unit may further incorporate a function to store current specified values for the rotating direction and number of rotations of the upper mortar and/or lower mortar speed and/or a current specified value for the gap between the upper and lower mortars in a predetermined memory in accordance with a predetermined storage operation performed via the operation unit, and a function to read stored values for the rotating direction and number of rotations of the upper mortar and/or lower mortar speed and/or a stored value for the gap between the upper and lower mortars from the predetermined memory and set the read values as the specified values in accordance with a predetermined read operation performed via the operation unit.

In such a configuration, when the optimum values are obtained for the current specified values for the rotating direction and number of rotations of the upper mortar and/or lower mortar speed and/or the current specified value for the gap between the upper and lower mortars, storing the optimum values in the predetermined memory allows settings to the optimum values to be easily made at any time by reading the optimum values. In this regard, when the storage in the memory and the reading from the memory for setting can be executed for each foodstuff type used, setting the optimum operation state for each foodstuff type can be very easily achieved.

### [Embodiment 9 of the Automatic Food Milling Apparatus]

In the basic configuration of the automatic food milling apparatus and each of the embodiments described above, the operation unit may include three analog operation elements corresponding to the lower mortar, the upper mortar, and the gap between the upper and lower mortars, respectively, so that specification of the rotating direction and the rotation speed and specification of the gap are performed via operation of the corresponding analog operation elements. The "analog operation elements" mean operation elements which can specify analog values, such as sliding operation elements or rotating operation elements. The "operation elements" as used herein include not only physically present operation elements but also operation elements providing a GUI (Graphical User Interface) displayed on a screen of an image display.

Such a configuration allows the target number of rotations of the upper mortar or the lower mortar or the target gap between the upper and lower mortars to be continuously changed. The configuration is thus suitable, for example, for a tuning operation for finding an optimum operation state in accordance with the nature of the ingredient foodstuffs (for example, density, hardness, water content, viscosity, and the amount of seeds or coats).

### [Embodiment 10 of the Automatic Food Milling Apparatus]

In the basic configuration of the automatic food milling apparatus and each of the embodiments described above, the operation unit may include three digital displays corresponding to the lower mortar, the upper mortar, and the gap between the upper and lower mortars, respectively, so that checking of the current rotating direction and rotation speed and the current gap is performed via the corresponding digital displays.

In such a configuration, the numbers of rotations of the upper mortar and the lower mortar and the current gap can be numerically accurately checked. Thus, for known ingredient foodstuffs, the optimum operation state can be easily reproduced by recording the numbers of rotations and the current gap or incorporating a well-known preset function in the apparatus to automatically store the numbers of rotations and the current gap in the memory.

### Advantageous Effects of Invention

In the method for operating the food mill according to the present invention, supplied ingredient foodstuffs (for example, foodstuffs heated and softened using superheated vapor) are pushed into the gap between the upper mortar and the lower mortar in such a manner as to be sucked into the gap. The ingredient foodstuffs are then crushed by a shearing force which depends on the difference in speed between the upper and lower mortars, while being separated into filtered foodstuffs (puree) and residues (including coats and seeds) by the solid-liquid separation effect of the lower mortar resulting from a centrifugal force which depends on the rotation speed of the lower mortar. Finally, the filtered foodstuffs and the residues are guided into the filtered foodstuff collection unit and the residue collection unit, respectively. At this time, variation which depends on the nature of the supplied ingredient foodstuffs (for example, density, hardness, water content, viscosity, and the amount of seeds or coats) is absorbed to some degree by adjusting the difference in speed between the upper and lower mortars or the rotation speed of the lower mortar. Thus, high-quality filtered foodstuffs (puree) can be stably manufactured from ingredient foodstuffs with various types of nature.

In the automatic food milling apparatus according to the present invention, when the predetermined operation is performed via the operation unit to specify the target rotating direction and the target rotation speed for the upper mortar, the target rotating direction and the target rotation speed for the lower mortar, and the target gap between the upper and lower mortars, the control unit operates to activate the driving mechanism to automatically set the rotating direction and rotation speed of the upper mortar, the rotating direction and rotation speed of the lower mortar, and the gap between the upper and lower mortars to the respective specified contents. Thus, such a function is utilized to execute the following process. A difference is caused in rotation speed between the upper and lower mortars to allow the ingredient foodstuffs to be crushed by a shearing force generated between the upper and lower mortars, and the conical recessed surface of the lower mortar is utilized to allow the crushed ingredient foodstuffs to be separated into filtered foodstuffs and residues by a centrifugal force resulting from rotation of the lower mortar so that the filtered foodstuffs and the residues can be collected in the filtered foodstuff collection unit and the residue collection unit, respectively.

Moreover, with the automatic food milling apparatus, the rotational behaviors of the upper and lower mortars and the gap between the upper and lower mortars can be optionally set, and thus, attempts may be freely made to perform various operation aspects, such as an operation of keeping one of the upper and lower mortars stationary, while rotating only the other mortar, an operation of rotating the upper mortar and the lower mortar in the opposite directions, an operation of increasing the rotation speed of one or both of the upper and lower mortars to a maximum speed, an operation of gradually increasing the difference in speed between the upper and lower mortars from zero, and an operation of gradually increasing the gap between the upper and lower mortars from zero. This can be utilized to easily perform, for example, a tuning operation for finding the optimum operation state and an operation dealing with blockage of the gap between the upper and lower mortars with the ingredient foodstuffs or clogging of the filtration holes.

### Brief Description of Drawings

FIG. 1 is a partially broken front view of an automatic food milling apparatus.
FIG. 2 is a left side view of the automatic food milling apparatus.
FIG. 3 is a partially broken right side view of the automatic food milling apparatus.
FIG. 4 is a perspective view depicting an example of a lower mortar.
FIG. 5A, FIG. 5B, and FIG. 5C are a bottom views depicting an example of an upper mortar.
FIG. 6 is a block diagram schematically depicting an electric hardware configuration.
FIG. 7 is a diagram illustrating a setting screen (for setting of basic items).
FIG. 8 is a diagram illustrating a setting screen (for setting of optional items).
FIG. 9 is a general flowchart illustrating operations of a control unit.
FIG. 10 is a general flowchart for a setting process.
FIG. 11 is a detailed flowchart of a basic-item setting process.
FIG. 12 is a detailed flowchart of an optional-item setting process.
FIG. 13 is a general flowchart of an operation process.
FIG. 14 is a detailed flowchart of a lower-mortar rotational driving process.
FIG. 15 is a detailed flowchart of a gap approaching and leaving driving process.
FIG. 16A and FIG. 16B are diagrams (1) illustrating an example of an operation aspect.
FIG. 17A and FIG. 17B are diagrams (2) illustrating an example of the operation aspect.
FIG. 18A and FIG. 18B are diagrams (3) illustrating an example of the operation aspect.
FIG. 19 is a diagram (4) illustrating an example of the operation aspect.
FIG. 20 is a bottom view (1) of a hold member depicting a variation of ingredient foodstuff guide grooves.
FIG. 21 is a bottom view (2) of a hold member depicting a variation of the ingredient foodstuff guide grooves.
FIG. 22 is a perspective view of a strainer member depicting a variation of filtration through-holes.
FIG. 23A, FIG. 23B, and FIG. 23C are diagrams illustrating the strainer member and depicting the variation of the filtration through-holes.
FIG. 24A and FIG. 24B are diagrams illustrating an important part of the filtration through-holes.
FIG. 25A, FIG. 25B, and FIG. 25C are diagrams illustrating a hold member with radial grooves in a conical protruding surface.
FIG. 26 is a cross-sectional view taken along line A-A in FIG. 25A.
FIG. 27A, FIG. 27B, and FIG. 27C are diagrams illustrating a strainer member with radial grooves in a conical recessed surface.
FIG. 28 is a diagram taken along line A-A in FIG. 27A.
FIG. 29 is a perspective view of the strainer member with the radial grooves in the conical recessed surface as seen from obliquely above (illustration of the filtration through-holes is omitted).

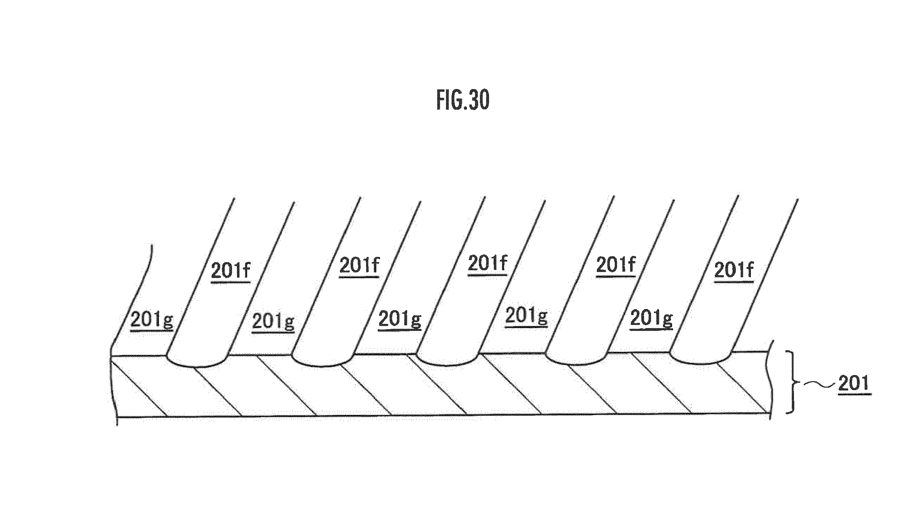

FIG. 30 is a cross-sectional view of an important part of the strainer member with the radial grooves in the conical recessed surface.

### Description of Embodiments

A preferred embodiment of an automatic food milling apparatus to which an operation method according to the present invention is applied will be described below in detail with reference to the attached drawings.

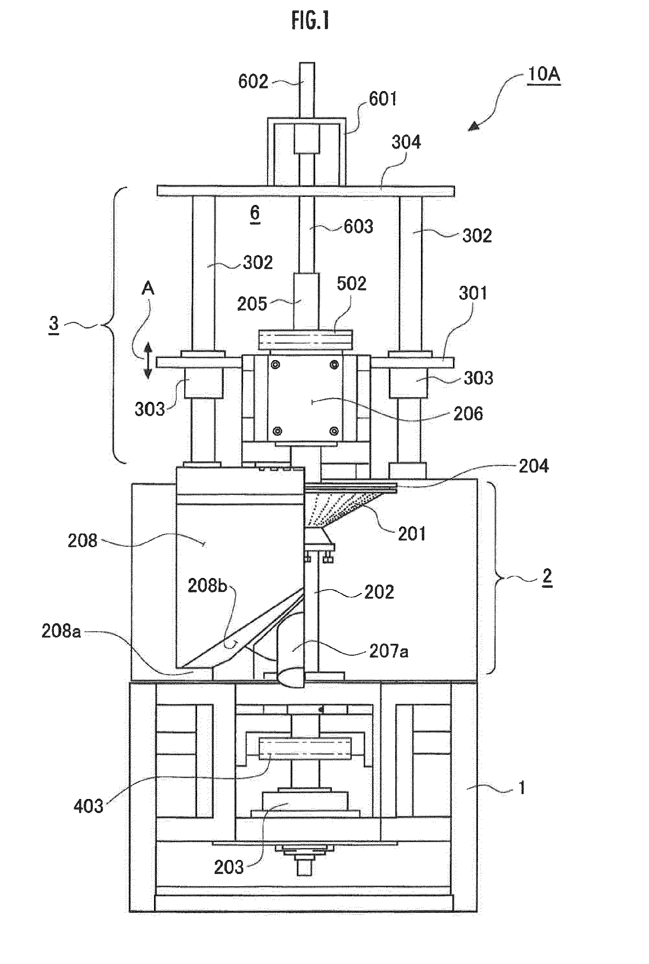

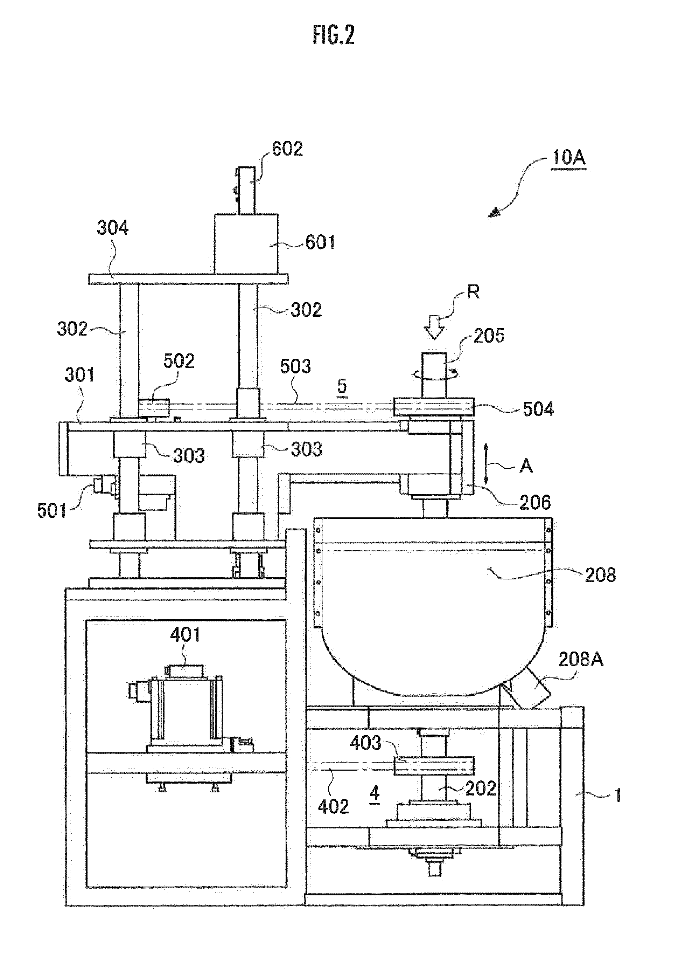

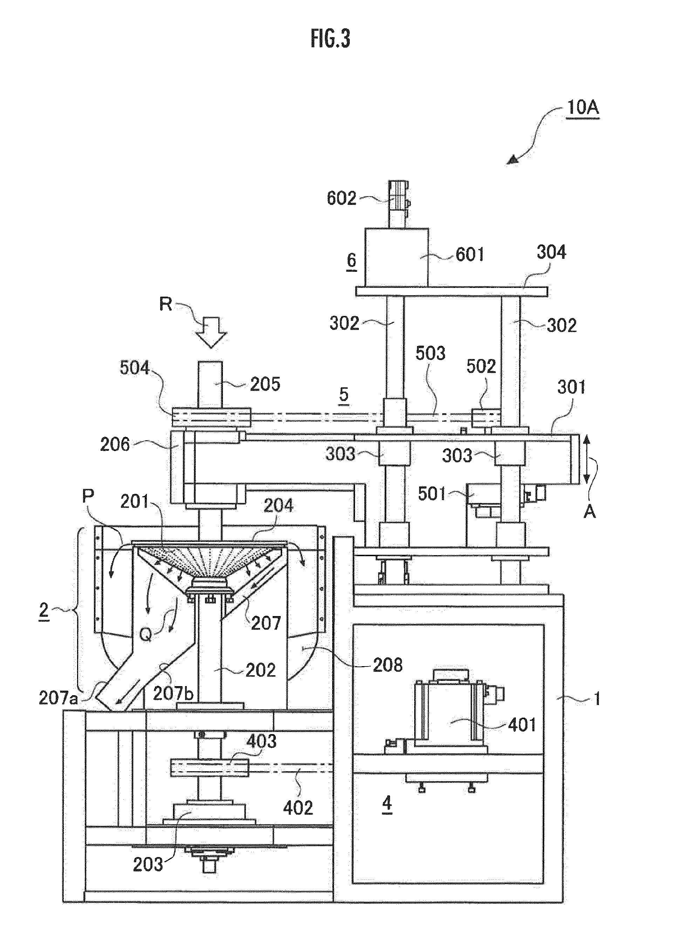

First, with reference to FIGs 1 to 5, a mechanical configuration of the automatic food milling apparatus according to the present invention will be described. As is apparent from the figures, a food milling apparatus 10A has a food milling processing unit 2 supported by a frame 1 so as to lie at an appropriate height. As depicted best in FIG. 1 and FIG. 3, the food milling processing unit 2 includes a lower mortar 201 supported with a conical recessed surface facing upward, the conical recessed surface serving as a filtration surface, and an upper mortar 204 supported with a conical protruding surface facing downward, the conical protruding surface serving as a pressing surface.

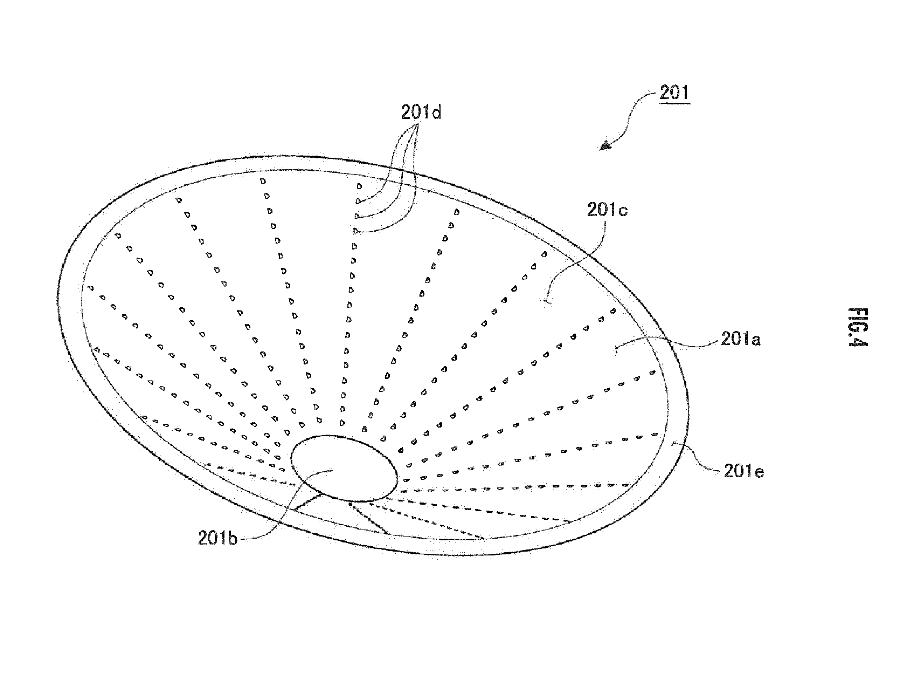

As depicted in FIG. 4, in this example, the lower mortar 201 is formed of a metal plate (for example, an aluminum plate or a stainless steel) shaped into a truncated cone with an obtuse angle and having a flat central area 201b, an inclined surface 201c occupying approximately the entire circumference of the lower mortar 201, and a flat flange-like peripheral portion 201e with a small width. A plurality of filtration through-holes 201 d is formed in the inclined surface 201c of the lower mortar 201 at approximately regular intervals along each of a plurality of radial lines to provide the lower mortar 201 with the function of a filtration surface (strainer) with a sufficient rigidity.

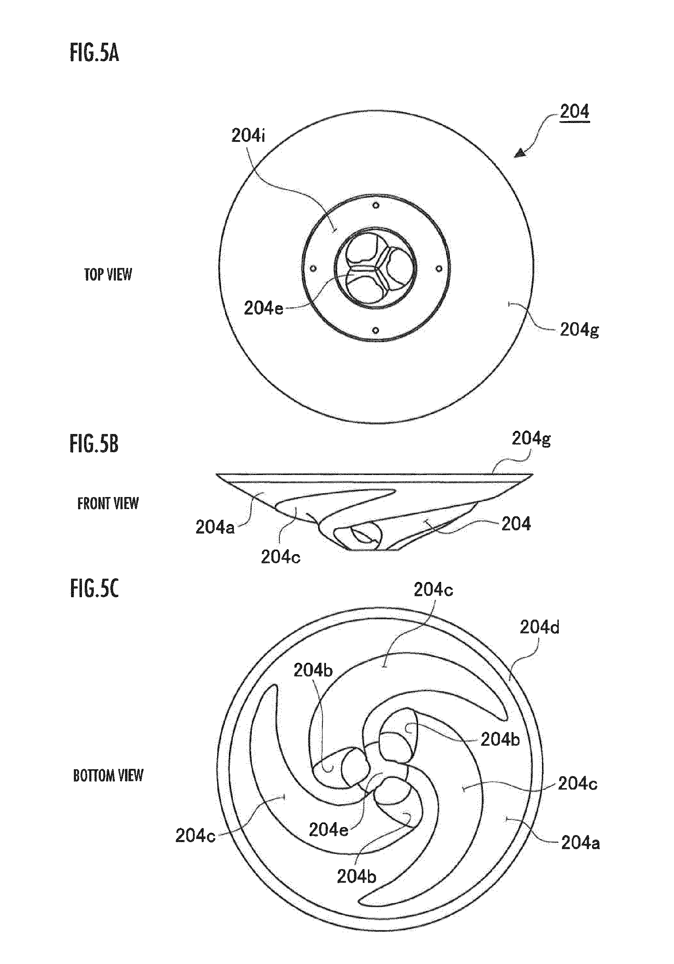

As depicted in FIG. 5, in this example, the upper mortar 204 is a metal solid component (for example, an aluminum die-cast product or a solid stainless steel product) including a flat upper surface 204g and a bottom surface 204a that is a conical protruding surface serving as a pressing surface. One inlet hole 204e is formed in the upper surface at a central position thereof, and three outlet holes 204b are formed in the bottom surface 204a near the center thereof at regular intervals in the circumferential direction. A passage for ingredient foodstuffs is formed inside the upper mortar 204 so as to branch into three passages inside the upper mortar 204 to allow the one inlet hole 204e to communicate with the three outlet holes 204b. Thus, the upper mortar 204 includes the function of a pressing surface with a sufficient rigidity and allows integral formation of a foodstuff supply passage branching from the one inlet hole 204e to the three outlet holes 204b. The foodstuff supply passage internally branching into the plurality of passages exerts a foodstuff suction effect under action of a centrifugal force as the upper mortar 204 rotates. The foodstuff supply passage thus advantageously allows foodstuffs to be smoothly supplied.

Each of the three outlet holes 204b connects to a start point of a foodstuff guide groove 204c extending outward in a radial direction like a vortex or a circular arc. An end point of the foodstuff guide groove 204c extends to the vicinity of the peripheral portion 204d. Reference numeral 204d denotes a horizontally extending flange-like peripheral portion with a small width.

The lower mortar 201 will further be described with reference back to FIG. 3. The lower mortar 201 is fixed to an upper end of a vertical shaft 202 rotatably supported via a bearing 203. Thus, the lower mortar 201 is rotatably supported with the conical recessed surface facing upward, the conical recessed surface serving as a filtration surface. On the other hand, the upper mortar 204 is fixed in a horizontal orientation to a lower end of a vertical ingredient foodstuff supply pipe 205 rotatably suspended and supported via a bearing 206 fixed to a platform 301 so that the supply tube 205 and the inlet hole 204e communicate with each other. Thus, the upper mortar 204 is rotatably supported with the conical protruding surface facing downward, the conical protruding surface serving as a pressing surface. Furthermore, the lower mortar 201 and the upper mortar 204 are positioned such that the conical recessed surface and the conical protruding surface lie opposing each other with a gap therebetween in the vertical direction with the conical central axes thereof coaxially aligned with each other.

The shaft 202 of the lower mortar 201 is rotationally driven via a rotational driving system 4. The rotational driving system 4 includes a first servo motor 401 that can rotate forward and backward at any speed, a driven pulley 403 fixed to the shaft 202, and a timing belt 402 wound between the driven pulley 403 and a driving pulley (not depicted in the drawings) fixed to an output shaft of the first servo motor 401. On the other hand, an ingredient supply pipe 205 connected to the upper mortar 204 is rotationally driven via a rotational driving system 5. The rotational driving system 5 includes a second servo motor 501 that can rotate forward and backward at any speed, a driven pulley 504 fixed to the ingredient supply pipe 205, and a timing belt 503 wound between the driven pulley 504 and a driving pulley 502 fixed to an output shaft of the second servo motor 501. Thus, the lower mortar 201 and the upper mortar 204 are each configured to be able to be rotated, by motive power, in both directions around the conical central axis at any speed.

As depicted in FIG. 1, by inserting guide sleeves 303 disposed at respective corners through respective vertical guide rods 302, the platform 301 supporting the bearing 206 is supported so as to be able to elevate and lower as depicted by arrow A while maintaining a horizontal orientation. The platform 301 is driven to elevate and lower via an elevating and lowering driving system 6. The elevating and lowering driving system 6 includes a third servo motor 602 fixed to a supporting stand 304 via a fixture 601 and a ball screw shaft 603 that converts rotational motion of the third servo motor 602 into linear motion in the vertical direction. Thus, the gap between the conical recessed surface of the lower mortar 201 and the conical protruding surface of the upper mortar 204 can be enlarged and contracted by motive power with the rotation of the lower mortar 201 and the upper mortar 204 maintained.

The food milling apparatus 10A has an ingredient foodstuff supply passage through which ingredient foodstuffs (for example, foodstuffs softened using superheated vapor) R are fed to the gap between the conical recessed surface of the lower mortar 201 and the conical protruding surface of the upper mortar 204. In this example, the ingredient foodstuff supply passage refers to a series of passages passing through the ingredient foodstuff supply pipe 205 and then leading from the inlet hole 204e to the three outlet holes 204b in the upper mortar 204 (see FIG. 3 and FIG. 5).

The food milling apparatus 10A further includes a filtered foodstuff collection tank 207 which, when the lower mortar 201 and the upper mortar 204 rotate across the ingredient foodstuffs R, collects filtered foodstuffs Q passing through (transmitted through) the conical recessed surface of the lower mortar 201, and a residue collection tank 208 which, when the lower mortar 201 and the upper mortar 204 rotate across the ingredient foodstuffs R, collects residues P rising along the conical recessed surface, while overflowing the conical recessed surface through the upper-end periphery 201e thereof.

As depicted in FIG. 3, in this example, the filtered foodstuff collection tank 207 has an inner bottom surface 207b which surrounds the entire circumference of a lower surface of the lower mortar 201 and which inclines and lowers to the front as seen from the front. The inner bottom surface is configured to be continuous with a filtered foodstuff discharge pipe 207a. Thus, an appropriate container is set immediately below a tip of the filtered foodstuff discharge pipe 207a to allow generated filtered foodstuffs (puree) to be continuously retrieved and stored in the container.

As depicted in FIG. 1 and FIG. 3, in this example, the residue collection tank 208 includes dividable, two right and left tanks which collect residues P ejected, by a centrifugal force, to the exterior through the gap between the lower mortar 201 and the upper mortar 204 and which are dividable so as to laterally sandwich the filtered foodstuff collection tank 207 between the left and right tanks. An inner bottom surface 208b of left tank inclines and lowers leftward, whereas an inner bottom surface 208b of the right tank inclines and lowers rightward. A residue discharge port 208a is formed at a lower end of the inclined inner bottom surface 208b. Thus, an appropriate container is set immediately below each of the left and right residue discharge ports 208a to allow generated residues (solids such as seeds, coats, and fiber) to be continuously retrieved and stored in the container.

In the food milling apparatus 10A mechanically configured as described above, the pressing surface of the upper mortar 204 is present in front of and away from the filtration surface of the lower mortar 201, which contributes to the solid-liquid separation effect. Thus, when the ingredient foodstuffs R fed to the gap between the upper mortar 204 and the lower mortar 201 sequentially through the ingredient foodstuff supply pipe 205 and the inlet hole 204e and three outlet holes 204b in the upper mortar 204 are, for example, softened foodstuffs (softened fruits, softened vegetables, or the like) treated using superheated vapor, the ingredient foodstuffs R are gradually ground between the filtration surface and the pressing surface as the two surfaces rotate relative to each other, with liquids contained in the foodstuffs extracted and squeezed out. The softened foodstuffs containing the thus extracted and squeezed-out liquids are collected by the solid-liquid separation effect of the conical recessed surface 204a serving as the filtration surface so that the filtered foodstuffs (puree) Q are transmitted through the conical recessed surface 201a and continuously collected in the filtered foodstuff collection tank 208, whereas the residues (solids such as fiber, coats, and seeds) P overflow the conical recessed surface 201a through the upper-end peripheral portion 201e thereof and are continuously collected in the residue collection tank 208.

The filtered foodstuffs (puree) Q thus obtained are generated by being passed to the lower mortar 201 while the softened foodstuffs being moderately collapsed by the grinding action between the filtration surface of the lower mortar 201 and the pressing surface of the upper mortar 204. Thus, most of the cells of the foodstuffs remain unchanged with the cell membranes thereof undestroyed and suffer little alteration caused by oxidization. The original colors, odors, tastes, and nutritional values of the foodstuffs are kept unchanged. Furthermore, some of the foodstuffs exert characteristic supplemental effects (an immunostimulating effect, an immunobalance suppression effect, a tea leaf nutritional-value enhancing effect, and a soybean nutritional-effect enhancing effect).

A scrubbing aspect between the filtration surface and the pressing surface which contributes to grinding the softened foodstuffs can be easily adjusted by performing speed control on motive power that rotates the lower mortar 201 and/or the upper mortar 204 via servo motors 401 and 501. Thus, the optimum scrubbing aspect is constantly selected by performing speed control (the magnitude of the speed, a periodic variation in speed, an intermittent operation, and the like) on the above-described rotary power, to enable manufacture of high-quality puree with the original colors, odors, tastes, and nutritional values of the foodstuffs kept unchanged regardless of the nature of the softened foodstuffs (density, hardness, viscosity, size, the contents of fiber, seeds, coats, and the like, water content, and the like).

Furthermore, although the supply of the ingredient foodstuffs R and the discharge of the filtered foodstuffs Q and the residues P are continuously performed, the apparatus has a simple basic structure in which the lower mortar 201 and the upper mortar 204 are disposed opposite each other in the vertical direction and in which at least one of the mortars is rotatable. Thus, the apparatus can be inexpensively produced, and maintenance work for the apparatus such as disassembly and cleaning is easy. In addition, the apparatus basically has a vertical structure in which the apparatus is centered around a vertical axis, and thus has advantages such as the need for a relatively small installation area.

Furthermore, the gap between the conical recessed surface 201a of the lower mortar 201 and the conical protruding surface 204a of the upper mortar 204 can be enlarged and contracted by mechanical power with the lower mortar 201 and the upper mortar 204 kept rotating. Thus, for example, using dynamic control such as control in which the initial gap is set to a larger value and is gradually contracted by mechanical power after the apparatus is sufficiently filled with ingredient foodstuffs or in which the gap is periodically varied by being widened and narrowed, the scrubbing effect on the ingredient foodstuffs can be optimized regardless of the nature of the softened foodstuffs (density, hardness, viscosity, size, the contents of fiber, seeds, coats, and the like, water content, and the like).

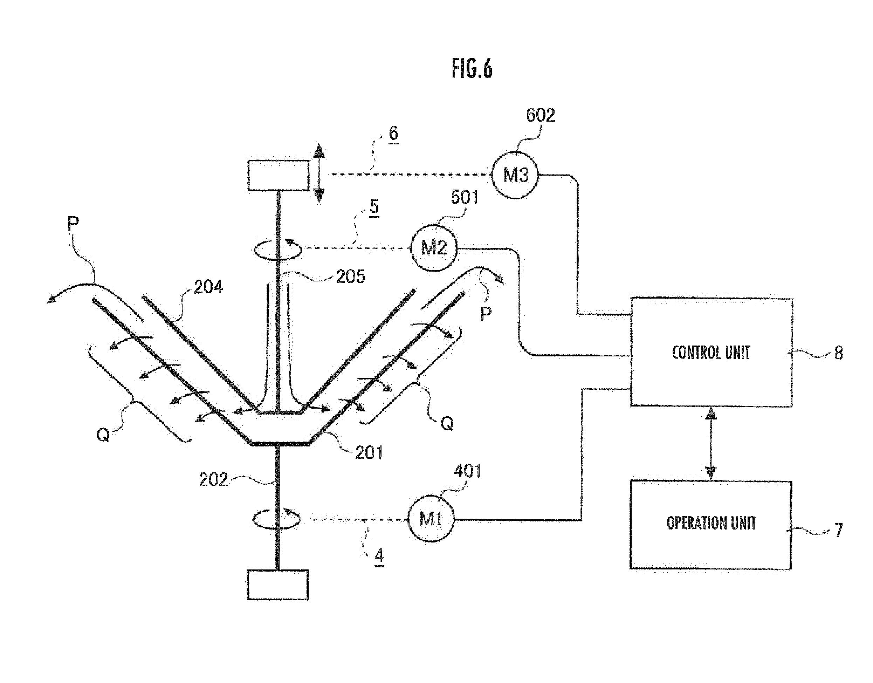

Now, with reference to FIGs 6 to 15, an electrical configuration of the automatic food milling apparatus to which the operation method according to the present invention is applied will be described. FIG. 6 depicts a block diagram schematically illustrating an electric hardware configuration of the automatic food milling apparatus 10.

The automatic food milling apparatus 10 according to the present invention includes a driving mechanism (described below in detail) including at least one or more driving sources and effecting rotational movement of the lower mortar 201, rotational movement of the upper mortar 204, and approaching and leaving movements of the upper and lower mortars across the gap, an operation unit 7, and a control unit 8 that controls the driving mechanism in response to a predetermined operation performed via the operation unit 7.

In this example, the driving mechanism includes a first driving system 4 with a first servo motor (M1) 401, a second driving system 5 with a second servo motor (M2) 501, and a third driving system 6 with a third servo motor (M3) 602 as described above with reference to FIG. 3. Thus, operations of the first servo motor (M1) 401, the second servo motor (M2) 501, and the third servo motor (M3) 602 are controlled to enable optional control of the rotational behavior of the lower mortar 201, the rotational behavior of the upper mortar 204, and the gap between the upper and lower mortars.

In this example, the operation unit 7 is configured by appropriately incorporating (programming) what is called "display components" such as various display lamps and operation buttons into the programmable terminal (hereinafter also referred to as a programmable display) applied to a programmable controller system (PLC system).

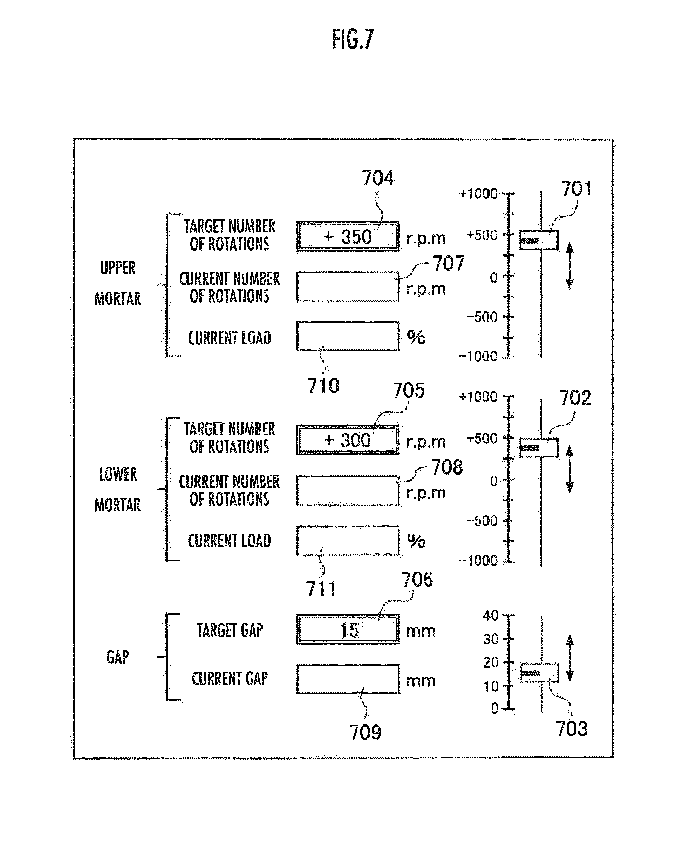

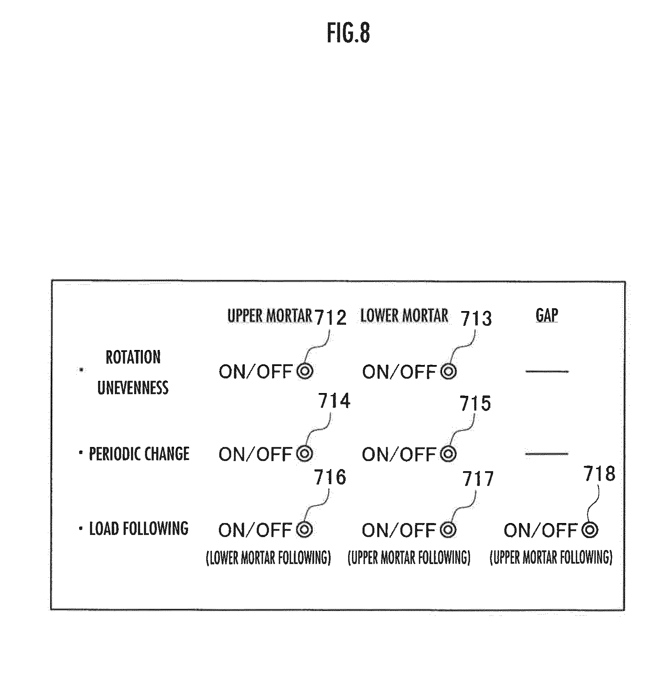

FIG. 7 and FIG. 8 each depict an example of a setting screen for the operation unit configured as described above. A screen for setting of basic items (see FIG. 7) and a screen for setting of optional items (see FIG. 8) can be selectively displayed on a touch panel providing the programmable terminal (PT), in response to a predetermined switching operation.

As depicted in FIG. 7, the following display areas are arranged in the screen for setting of basic items in order from the top to bottom: a display area for items related to the upper mortar, a display area for items related to the lower mortar, and items related to the gap between the upper and lower mortars. The display area for items related to the upper mortar is laterally divided into two areas. In the left area, the following numerical displays are arranged in order from top to bottom: a numerical display 704 indicative of the target number of rotations (rpm) of the upper mortar, a numerical display 707 indicative of the current number of rotations (rpm) of the upper mortar, and a numerical display 710 indicative of the current load (%) on the upper mortar. On the other hand, in the right area, a sliding operation element 701 is disposed which can be slid up and down by touch operations and which allows setting of the target number of rotations for the upper mortar. A linear scale is provided along a vertical moving trajectory of the sliding operation element 701. In this example, the target number of rotations of the upper mortar can be set within the range of ±1,000 rpm. A symbol (+ or -) indicative of a rotating direction is added to each indication of the number of rotations.

Similarly, the display area for items related to the lower mortar is laterally divided into two areas. In the left area, the following numerical displays are arranged in order from top to bottom: a numerical display 705 indicative of the target number of rotations (rpm) of the lower mortar, a numerical display 708 indicative of the current number of rotations (rpm) of the lower mortar, and a numerical display 711 indicative of the current load (%) on the lower mortar. On the other hand, in the right area, a sliding operation element 702 is disposed which can be slid up and down by touch operations and which allows setting of the target number of rotations for the lower mortar. A linear scale is provided along a vertical moving trajectory of the sliding operation element 702. In this example, the target number of rotations of the lower mortar can be set within the range of ±1,000 rpm. A symbol (+ or -) indicative of a rotating direction is added to each indication of the number of rotations.

Similarly, the display area for items related to the gap between the upper and lower mortars is laterally divided into two areas. In the left area, the following numerical displays are arranged in order from top to bottom: a numerical display 706 indicative of the target gap (mm) between the upper and lower mortars and a numerical display 709 indicative of the current gap (mm) between the upper and lower mortars. On the other hand, in the right area, a sliding operation element 703 is disposed which can be slid up and down by touch operations and which allows setting of the target gap between the upper and lower mortars. A linear scale is provided along a vertical moving trajectory of the sliding operation element 703. In this example, the target gap between the upper and lower mortars can be set within the range of 0 to 40 mm.

Thus, the sliding operation elements 701, 702, 703 are slid up and down with the display contents of the numerical displays 704, 705, and 706 viewed to allow free setting and specification of the target rotating direction and number of rotations of the upper mortar, the target rotating direction and number of rotations of the lower mortar, and the target size of the gap between the upper and lower mortars. In the illustrated example, the target number of rotations of the upper mortar is set to "+350" rpm, the target number of rotations of the lower mortar is set to "+300" rpm, and the gap between the upper and lower mortars is set to "15" mm.

As depicted in FIG. 8, the screen for setting of optional items is partitioned into a 3 x 3 matrix. The first row is assigned to a "rotation unevenness" as an optional item. The second row is assigned to a "periodic change mode" as an optional item. The third row is assigned to a "load following mode" as an optional item. Furthermore, the first column is assigned to the "upper mortar" as a control target. The second column is assigned to the "lower mortar" as a control target. The third column is assigned to the "gap" as a control target. Illuminated pushbuttons 712 to 718 for ON/OFF operations are arranged at respective intersection point in the matrix, the illuminated pushbuttons being used to specify whether or not to select the "optional item" for the corresponding "control target".

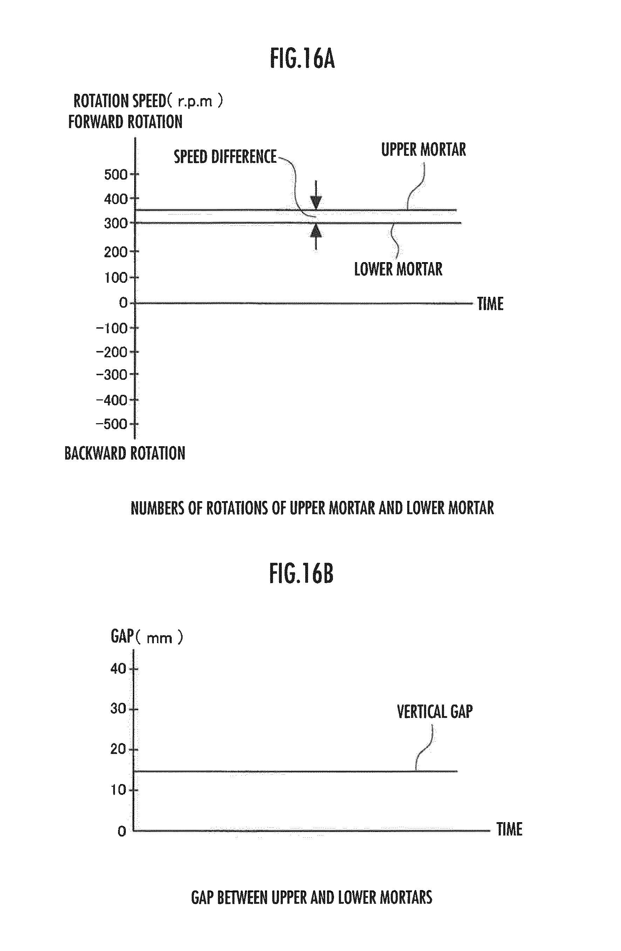

Thus, one of the illuminated pushbuttons 712, 714, and 716 arranged in the first to third rows in the first column is pushed to allow selection of one of the modes, that is, the "rotation unevenness mode", the "periodic change mode", or the "load following mode (lower mortar following)" for the upper mortar. Similarly, one of the illuminated pushbuttons 713, 715, and 717 arranged in the first to third rows in the second column is pushed to allow selection of one of the modes, that is, the "rotation unevenness mode", the "periodic change mode", or the "load following mode (upper mortar following)" for the lower mortar. Moreover, the illuminated pushbutton 718 disposed in the third row in the third column is pushed to allow selection of the "load following mode (upper mortar following)" for the gap between the upper and lower mortars. The contents of the "rotation unevenness mode", the "periodic change mode", and the "load following mode (lower mortar following)" will be described below in detail with reference to FIGs 16 to 19.

Referring back to FIG. 6, in this example, the control unit 8 includes the programmable controller system (PLC system) incorporating a control function to control the driving mechanism so that the rotations of the lower mortar and the upper mortar and the gap between the upper and lower mortars are adjusted to the rotating directions and rotation speeds and the target gap specified by a predetermined operation performed via the programmable terminal (PT) configuring the operation unit 7 and so that optional functions selected by a predetermined operation performed via the programmable terminal (PT) are executed.

The programmable controller system (PLC system) adopted in this example is of a building block type (not depicted in the drawings). Specifically, the programmable controller system (PLC system) includes a CPU unit, at least one or more I/O (input/output) units, and further at least one or more high functional units. In particular, in this example, one of the high functional units is a tri-axial motion control unit (incorporating a servo amplifier function) configured to drive the first to third servo motors (M1 to M3).

The CPU unit integrally controls the programmable terminal (PT) functioning as the operation unit 7, the at least one or two I/O units, and the motion control unit driving the first to third servo motors. That is, as is well-known by those skilled in the art, the CPU unit includes a user program memory in which user programs are stored, an I/O memory in which I/O data are stored, and a system program memory in which system programs allowing the functions of the PLC (a user program execution function, an I/O update function, a peripheral service function such as PT management, and the like) to be executed are stored.

In this example, the user programs are configured to provide necessary command values to the motion control unit so that the rotations of the lower mortar and the upper mortar and the gap between the upper and lower mortars are adjusted to the rotating direction and rotation speed and the gap which are specified by a predetermined operation via the programmable terminal (PT) providing the operation unit 7 and so that optional functions selected by a predetermined operation performed via the programmable terminal (PT).

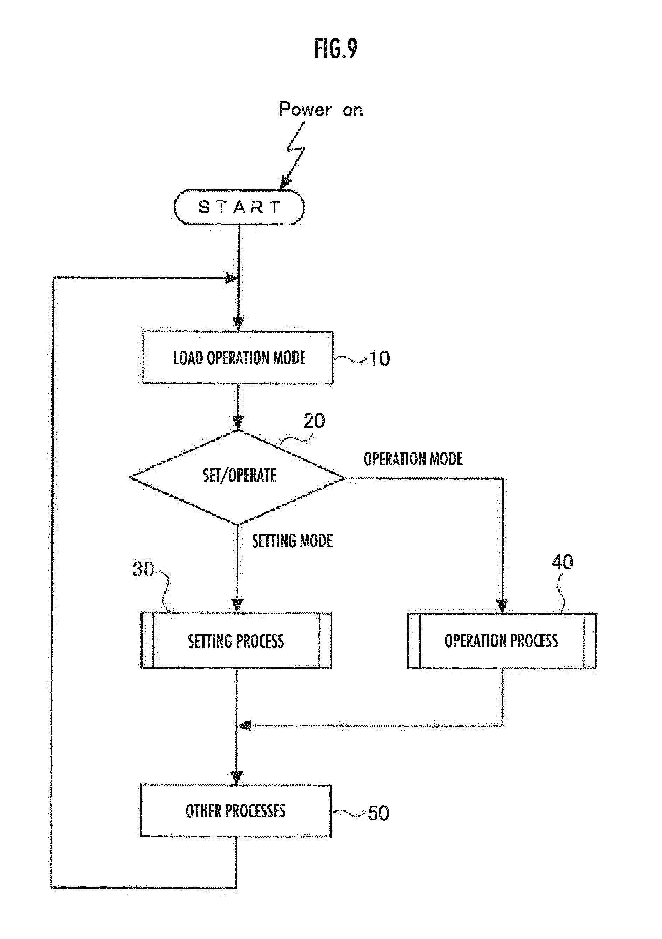

FIG. 9 depicts a general flowchart illustrating operations of the control unit 8 implemented by executing the user programs configured as described above. In FIG. 9, when powered on to start a process, the apparatus first loads an operation performed via a mode selection switch (not depicted in the drawings) in the programmable terminal (PT) providing the operation unit 7 (step 10) to determine whether an action mode is a "setting mode" or an "operation mode" (step 20). Subsequently, depending on whether the determination result is the "setting mode" or the "operation mode", a predetermined setting process (step 30) or a predetermined operation process (step 40) is selectively executed, and another common process (step 50) for the programmable controller (PLC) is then carried out. Then, the above-described series of operations is repeatedly performed.

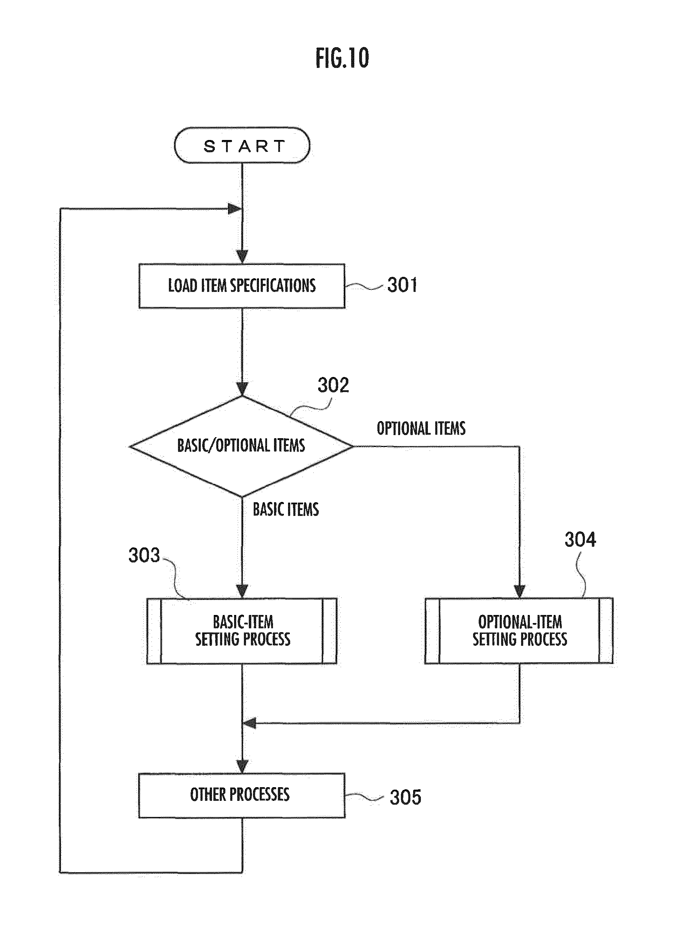

FIG. 10 depicts a general flowchart of the setting process (step 30). In FIG. 10, upon staring the process, the apparatus first loads the specified item in the programmable terminal (PT) providing the operation unit 7 (step 301) to determine whether the specified item is a "basic item" or an "optional item". Subsequently, depending on whether the determination result is the "basic item" or the "optional item", a predetermined basic-item setting process (step 303) or a predetermined optional-item setting process (step 304) is selectively executed, and another common process (step 305) is then carried out. Then, the above-described series of operations is repeatedly performed.

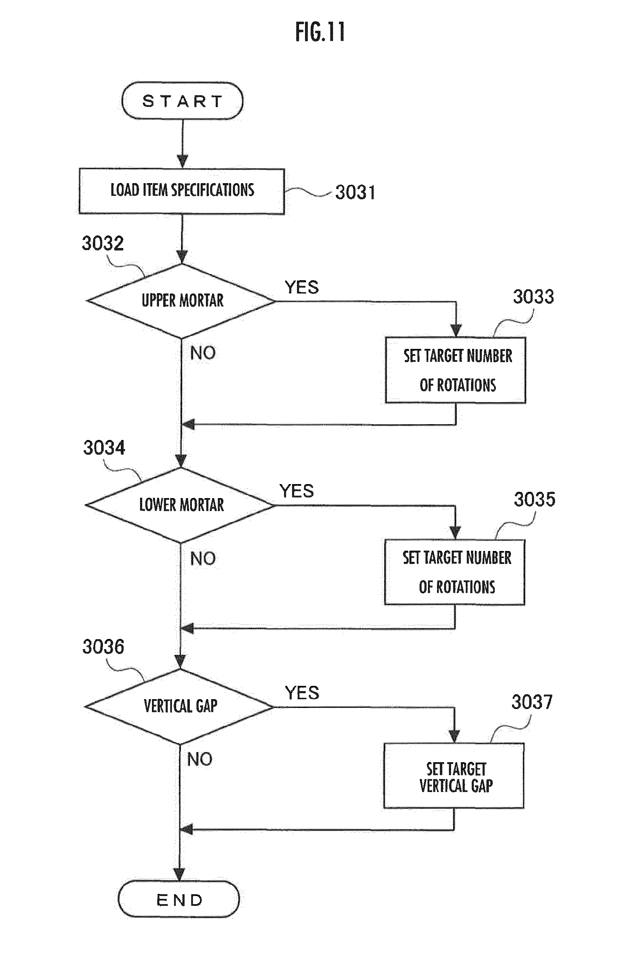

FIG. 11 depicts a detailed flowchart of the basic-item setting process. In FIG. 11, upon starting the process, the apparatus first loads the item setting in the programmable terminal (PT) providing the operation unit 7 (step 3031) to determine whether the item setting is the "upper mortar", the "lower mortar", or the "vertical gap" (steps 3032, 3034, and 3036). Subsequently, depending on the determination result, a target number-of-rotations setting process (step 3033), a target number-of-rotations setting process (step 3035), or a target vertical gap setting process (step 3037) is executed to allow the target number of rotations for the upper mortar, the target number of rotations for the lower mortar, and the target vertical gap which are specified via the programmable terminal (PT) providing the operation unit 7 to be stored in the respective predetermined setting memories.

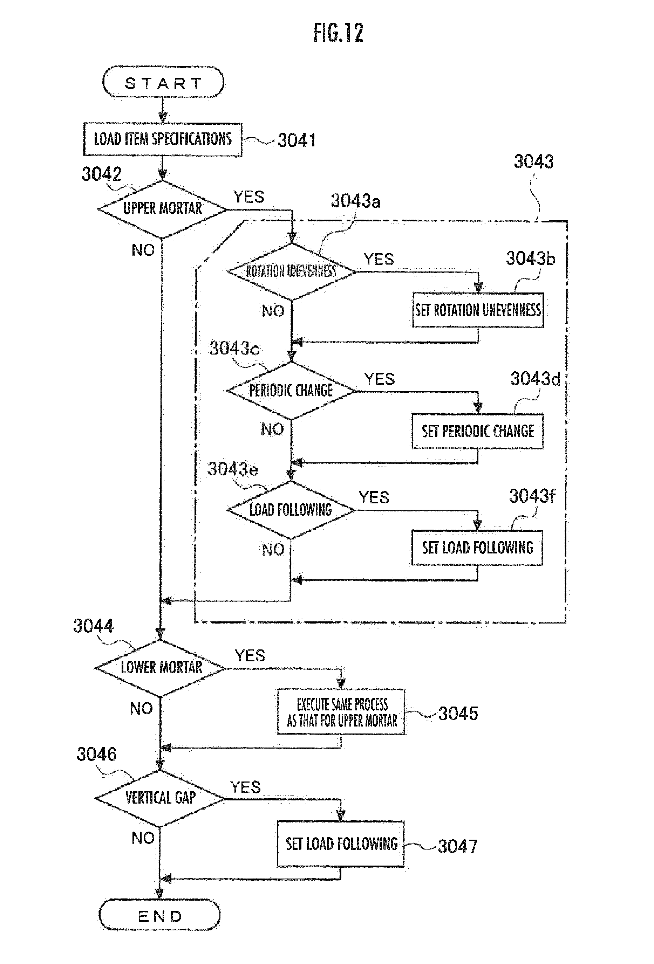

FIG. 12 depicts a detailed flowchart of the optional-item setting process. Upon starting the process, the apparatus first loads the item setting in the programmable terminal (PT) providing the operation unit 7 (step 3041) to determine whether the item setting is the "upper mortar", "lower mortar" or the "vertical gap" (steps 3042, 3044, and 3046). Subsequently, depending on the determination result, an option setting process for the upper mortar (step 3043), an option setting process for the lower mortar (step 3045), and a load following option setting process for the vertical gap (step 3047) is executed.

In the option setting process for the upper mortar (step 3043), whether the content of the option is the "rotation unevenness setting", "periodic change", or "load following" is determined (steps 3043a, 3043c, and 3043e), and depending on the determination result, a rotation unevenness option setting process (step 3043b), a periodic-change option setting process (step 3043d), or a load following option setting process (step 3043f) is selectively executed. Execution of any of these option setting processes (steps 3043b, 3043d, and 3043f) sets the content of a corresponding option flag provided on the predetermined setting memory to change from "0" to "1". Thus, referencing the statuses of these flags allows the content of the set option to be recognized.

The contents of the option setting process for the lower mortar (step 3045) are similar to the contents of the option setting process for the upper mortar (step 3043) except that the target item setting in the former contents is the "lower mortar", and will thus not be described in detail.

When the load following option setting process for the vertical gap (step 3047) is executed, the content of a corresponding option flag provided on the predetermined setting memory is to change from "0" to "1". Thus, referencing the status of the flag allows the content of the set option to be recognized as "load following".

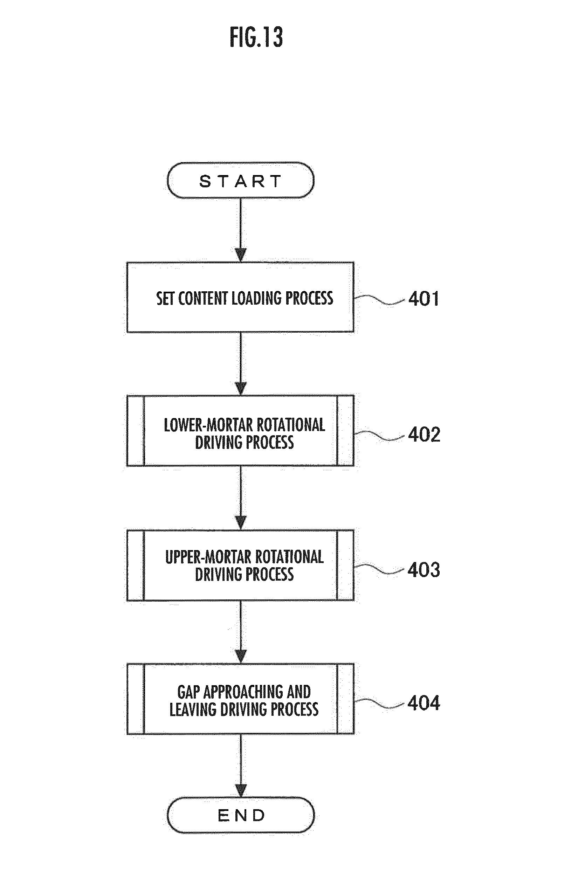

Now, the operation process (step 40) depicted in FIG. 9 will be described in detail. FIG. 13 depicts a general flowchart of the operation process. In FIG. 13, upon starting the process, the apparatus first executes a set content loading process (step 401) to load various data set in the setting process (step 30) (the rotating direction and number of rotations of the upper mortar, the rotating direction and number of rotations of the lower mortar, the gap between the upper and lower mortars, the set contents of options for the upper mortar, the set contents of options for the lower mortar, the set contents of options for the gap between the upper and lower mortars, and the like).

Subsequently, based on the loaded data, a lower-mortar rotational driving process (step 402), an upper-mortar rotational driving process (step 403), and a gap approaching and leaving driving process (step 404) are sequentially executed.

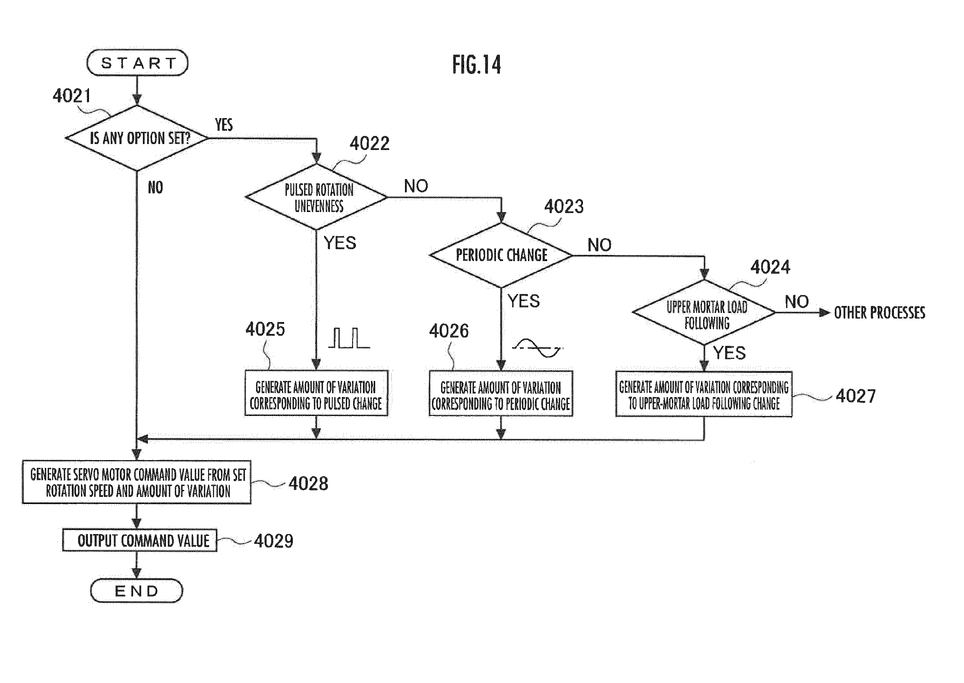

FIG. 14 depicts a detailed flowchart of the lower-mortar rotational driving process (step 402). In FIG. 14, upon starting the process, the apparatus determines whether or not any option is set for the lower mortar based on the above-described loaded data (step 4021). When the result of the determination of whether or not any option is set for the lower mortar is "NO" (step 4021 "NO"), a servo motor command value is subsequently generated from the set rotation speed and the amount of variation (in this case, the value of the amount of variation is zero) (step 4028). The thus generated instruction value is output to the motion control unit (not depicted in the drawings) (step 4029). Then, the motion control unit operates to perform servo control on the rotation speed of the first servo motor (M1) to adjust the rotation speed of the lower mortar to the target rotation speed (see FIG. 16A).

Furthermore, at this time, the rotation speed of and the rotational load on the first servo motor (M1) are read from the motion control unit and transmitted at an appropriate timing to the programmable terminal (PT) providing the operation unit 7. Thus, the numerical displays 707 and 710 on the programmable terminal numerically indicate the current number of rotations (rpm) and the rotational load (%) for the lower mortar.

When the result of the determination of whether or not any option is set for the lower mortar is "YES" (step 4021 "YES"), whether the content of the set option is "pulsed rotation unevenness", "periodic change", or "upper mortar load following" is determined (steps 4022, 4023, and 4024).

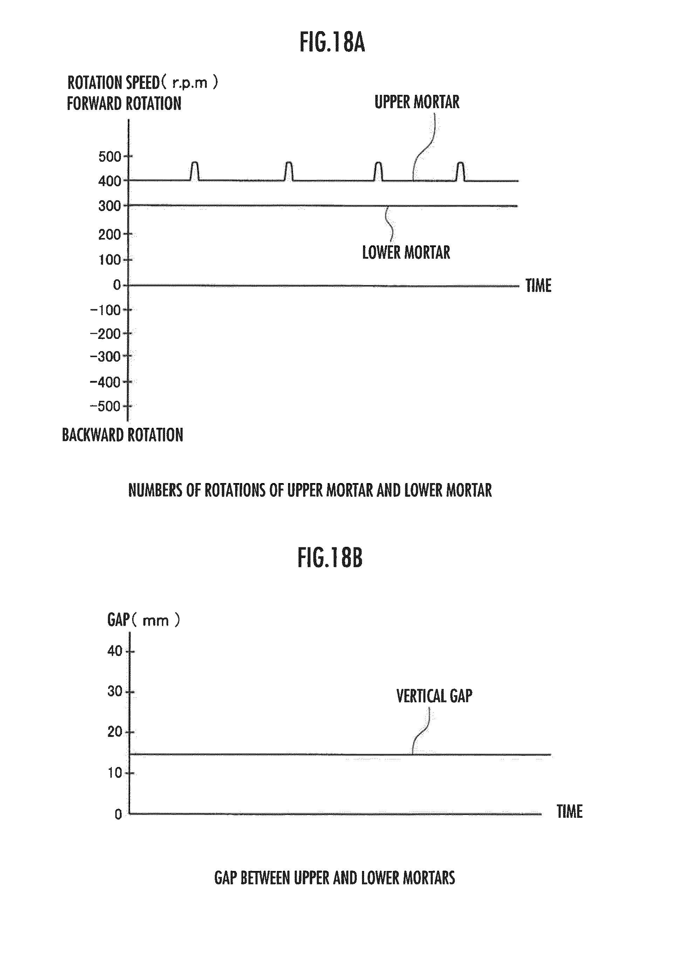

When the content is determined to the "pulsed rotation unevenness" (step 4022 YES), a process of generating an amount of variation corresponding to a pulsed change (step 4025) is subsequently executed. Then, an amount of variation in speed is generated which is needed to provide a prepared pulsed change in speed for the set rotation speed. The thus generated amount of variation in speed is used to generate a command value in a command value generation process (step 4028). Subsequently, the command value with the amount of variation taken into account is output to the motion control unit (step 4029). Then, the motion control unit operates to perform servo control on the rotation speed of the first servo motor (M1) to adjust the rotation speed of the lower mortar to the target rotation speed involving the pulsed rotation unevenness (see FIG. 18A).

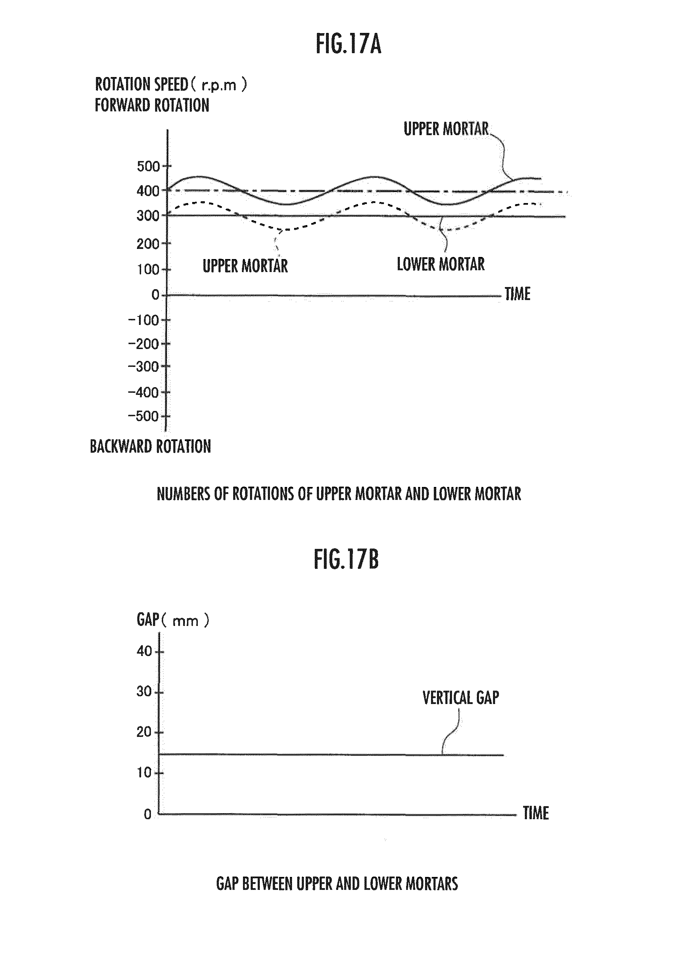

Furthermore, when the content is determined to be the "periodic change" (step 4023 YES), a process of generating an amount of variation corresponding to a periodic change (step 4026) is subsequently executed. Then, an amount of variation in speed is generated which is needed to provide a prepared periodic change in speed (in this example, a sine-wave-like change in speed) for the set rotation speed. The thus generated amount of variation in speed is used to generate a command value in the command value generation process (step 4028). Subsequently, the command value with the amount of variation taken into account is output to the motion control unit (step 4029). Then, the motion control unit operates to perform servo control on the rotation speed of the first servo motor (M1) to adjust the rotation speed of the lower mortar to the target rotation speed involving a sine-wave-like change in speed (see FIG. 17A). In FIG. 17A, a periodic variation in the number of rotations of the upper mortar depicted by a solid line (the former) occurs in an area where the relative number of rotations between the upper mortar and the lower mortar is constantly positive. A periodic variation in the number of rotations of the upper mortar depicted by a wavy line (the latter) occurs within a given range around a zero difference in rotation speed between the upper and lower mortars, in both a forward direction and a backward direction. In the latter case, filtration through-holes, for example, radially arranged on the lower mortar are periodically scrubbed equally in both the forward and backward directions. Consequently, compared to a configuration in which the filtration through-holes are scrubbed in one direction, the above-described configuration advantageously restrains each of the filtration through-holes from being clogged with the residues.

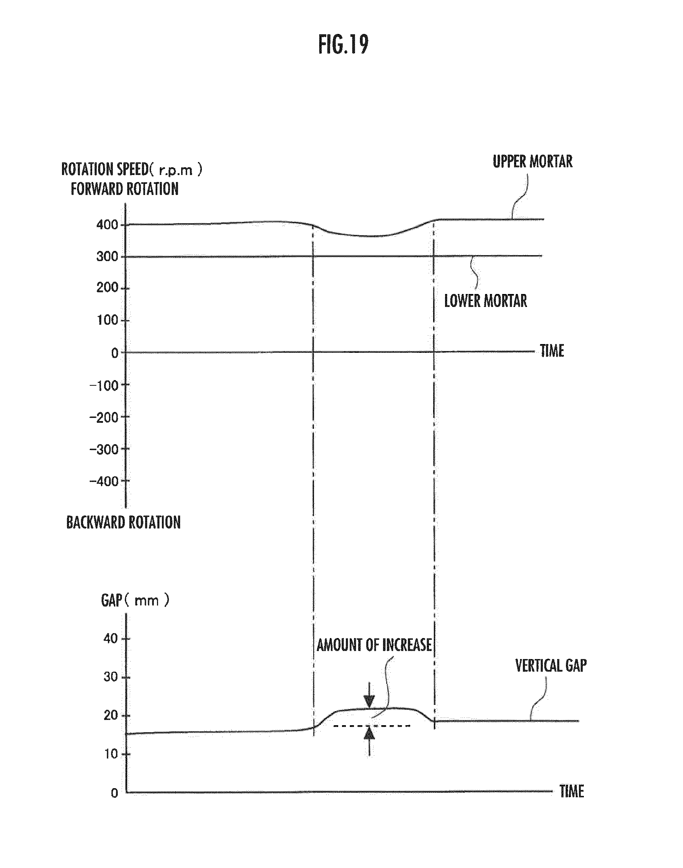

Moreover, when the content is determined to be the "upper mortar load following" (step 4024), a change in the rotational load on the upper mortar read from the motion control unit (not depicted in the drawings) is determined, and a process is executed in which an amount of variation in the speed of the lower mortar needed to cancel the change is generated (step 4027). The thus generated amount of variation in speed is used to generate a command value in the command value generation process (step 4028). Subsequently, the command value with the amount of variation taken into account is output to the motion control unit (step 4029). Then, the motion control unit operates to perform servo control on the rotation speed of the first servo motor (M1) to adjust the rotation speed of the lower mortar to the target rotation speed involving a change in speed that cancels the variation in the rotational load of the upper mortar (see FIG. 19).

Speed control for the upper mortar is similar to the process for the lower mortar (steps 4021 to 4029) described above with reference to FIG. 14, and will thus not be described below.

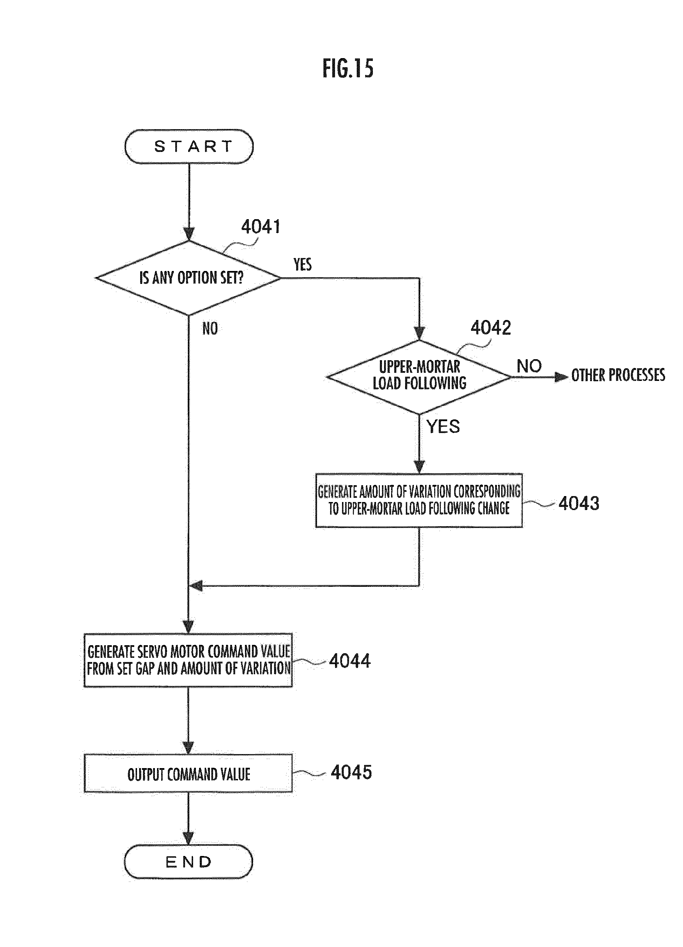

FIG. 15 depicts a detailed flowchart of the gap approaching and leaving driving process (step 404). In FIG. 15, upon starting the process, the apparatus determines whether or not any option is set for the gap between the upper and lower mortars on the basis of the loaded data (step 4041). When the result of the determination of whether or not any option is set for the gap is "NO" (step 4041 "NO"), a servo motor command value is subsequently generated from the set target gap and the amount of variation (in this case, the value of the amount of variation is zero) (step 4044). The thus generated command value is output to the motion control unit (not depicted in the drawings) (step 4029). Then, the motion control unit operates to perform servo control on the rotation speed of the third servo motor (M3) to adjust the gap between the upper and lower mortars to the target gap (see FIGs 16B to 18B).

Furthermore, at this time, the current size of the gap is detected by a separate sensor and transmitted at an appropriate timing to the programmable terminal (PT) providing the operation unit 7. Thus, the numerical display 709 on the programmable terminal (PT) numerically indicates the current gap (mm) between the upper and lower mortars.

When the result of the determination of whether or not any option is set for the gap between the upper and lower mortars is "YES" (step 4041 "YES"), the apparatus subsequently determines the content of the set option to be the "upper-mortar load following" (step 4042 YES). Then, a change in the rotational load on the upper mortar read from the motion control unit (not depicted in the drawings) is determined, and a process is executed in which an amount of variation in gap needed to cancel the change is generated (step 4043). The thus generated amount of variation in gap is used to generate a command value in the command value generation process (step 4044). Subsequently, the command value with the amount of variation taken into account is output to the motion control unit (step 4029). Then, the motion control unit operates to perform servo control on the rotation speed of the third servo motor (M3) to adjust the gap between the upper and lower mortars to the value that cancels the variation in the rotational load of the upper mortar (see FIG. 19).

In the above-described embodiment, for convenience of description, the setting process (step 30) and the operation process (step 40) are separately executed as depicted in FIG. 9. However, it should be noted that, in actuality, a predetermined operation is preformed to switch to an online setting mode to allow the setting process (step 30) and the operation process (step 40) to be concurrently executed in a time sharing manner and that the setting values may thus be changed even during the operation mode.

Finally, operations of the automatic food milling apparatus including the above-described mechanical configuration and electrical configuration will be described in detail with particular reference to FIGs 16 to 19.

It is assumed that the rotating direction and rotation speed of the lower mortar, the rotating direction and rotation speed of the upper mortar, and the gap between the upper and lower mortars are set to +300 rpm, +350 rpm, and 15 mm, respectively. In this case, in the screen for setting of basic items depicted in FIG. 7, the sliding operation elements 701, 702, and 703 are slid up and down to set the target rotation speed of the upper mortar, the target rotation speed of the lower mortar, and the gap between the upper and lower mortars to +350 rpm, +300 rpm, and 15 mm, respectively. Then, as depicted in FIG. 16, the control unit 7 operates to adjust the rotation speed of the upper mortar, the rotation speed of the lower mortar, and the gap between the upper and lower mortars to +350 rpm, +300 rpm, and 15 mm, respectively. Thus, in this state, when ingredient foodstuffs (for example, vegetables, fruits, or grains heated and softened using superheated vapor) are fed to the gap between the upper mortar and the lower mortar, the ingredient foodstuffs placed in the gap between the upper mortar and the lower mortar are ground or crushed at a speed of 50 rpm, which is equal to the difference in rotation speed between the upper mortar and the lower mortar. The resultant solid-liquid mixture is separated into solids and liquids by a centrifugal force resulting from the rotation speed of the lower mortar, 300 rpm. The filtered foodstuffs (puree) are guided into the filtered foodstuff collection tank 207, whereas the residues are guided into the residue collection tank 208.

In this state, with the production efficiency for the filtered foodstuffs (puree) observed, the sliding operation elements 701, 702, and 703 are appropriately operated in the screen for setting of basic items depicted in FIG. 7 to appropriately adjust the rotation speed of the upper mortar, the rotation speed of the lower mortar, and the gap between the upper and lower mortars. This enables tuning to the optimum operation state.

Furthermore, with the target rotation speed of the upper mortar increased to +400 rpm, the following operation is performed on the screen for setting of optional items depicted in FIG. 8. For example, for the upper mortar, the illuminated pushbutton 714 is turned on in order to adopt the "periodic change" as an option. Then, as depicted in FIG. 17, the rotation speed of the upper mortar periodically changes within a given vertical range around +400 rpm like a sine wave. Thus, adopting the "periodic change" as an option allows the difference in speed between the upper and lower mortars to vary periodically. This periodically varies the grinding or crushing force to allow for efficient operation while preventing clogging of the gap with the residues and clogging of the filtration through-holes. In this regard, when the target rotation speed of the upper mortar is set to +300 rpm, a periodic variation occurs within a given range around a zero difference in rotation speed between the upper and lower mortars, in both a forward direction and a backward direction, as depicted by a wavy line in FIG. 17. Then, the filtration through-holes, for example, radially arranged on the lower mortar are periodically equally scrubbed in both forward and backward directions. Thus, compared to a configuration in which the filtration through-holes are scrubbed in one direction, the above-described configuration advantageously restrains the filtration through-holes from being clogged with the residues.

Additionally, with the target rotation speed of the upper mortar increased to +400 rpm, the following operation is performed on the screen for setting of optional items depicted in FIG. 8. For example, for the lower mortar, the illuminated pushbutton 712 is turned on in order to adopt the "rotation unevenness" as an option. Then, as depicted in FIG. 18A, the rotation speed of the upper mortar, which is +400 rpm in the normal state, can be periodically instantaneously increased like impulse to cause rotation unevenness. Thus, adopting the "rotation unevenness" as an option in this manner allows the difference in speed between the upper and lower mortars to vary periodically like impulse. Consequently, periodically applying an impact to the rotating upper mortar allows for efficient operation while promoting grinding or crushing.

In addition, with the target rotation speed of the upper mortar increased to +400 rpm, the following operation is performed on the screen for setting of optional items depicted in FIG. 8. For example, for the gap between the upper and lower mortars, the illuminated pushbutton 718 is turned on in order to adopt the "load following (upper mortar following)" as an option. The gap between the upper and lower mortars is 15 mm in the normal state. However, as depicted in FIG. 19, when the rotational load on the upper mortar increases to reduce the speed, the gap increases so as to cancel the increase in rotational load, whereas, when the crushing or grinding of the ingredient foodstuffs progresses to reduce the rotational load on the upper mortar to increase the speed, the gap decreases to cancel the reduction in the rotational load. Thus, adopting the "load following (upper mortar following)" as an option allows the gap between the upper and lower mortars to be automatically increased or reduced to enable efficient operation, while promoting the optimum grinding or crushing.

### [Lower Mortar Following Automatic Setting Mode]

In the above description, the number of rotations (including the rotating direction) of the upper mortar, the number of rotations (including the rotating direction) of the lower mortar are individually specified. However, when only the number of rotations of the lower mortar is to be changed (this impacts the solid-liquid separation effect) with the difference in number of rotations between the upper mortar and the lower mortar (this impacts the grinding effect) maintained constant, a lower-mortar-following automatic setting mode for the number of rotations of the upper mortar can be conveniently used. For this purpose, one illuminated pushbutton A (not depicted in the drawings) is arranged in the setting screen (for setting of basic items) depicted in FIG. 7 in association with the upper mortar area. With the pushbutton A turned on, when the operation element 702 is operated to change the target number of rotations of the lower mortar, the target number of rotations of the upper mortar is changed in conjunction with the operation of the operation element, with the difference between the target number of rotations of the upper mortar and the target number of rotations of the lower mortar maintained, the difference being present at the time of turn-on of the pushbutton A. For example, as depicted in FIG. 7, the pushbutton A is turned on when the target number of rotations of the upper mortar is +350 and the target number of rotations of the lower mortar is +300 (upper mortar (350) - lower mortar (300) = 50). When the operation element 702 is subsequently operated to change the target number of rotations of the lower mortar from +300 to +400, the target number of rotations of the upper mortar is automatically changed from +350 to +450 (upper mortar (450) - lower mortar (400) = 50). Software configured to provide an automatic change function can be easily implemented by those skilled in the art. Thus, description with reference to a flowchart is omitted. Furthermore, this concept is not limited to maintaining of the difference in the number of rotations between the upper mortar and the lower mortar but may be widely expanded to a case where the target number of rotations of the upper mortar is changed so as to follow a change in the target number of rotations of the lower mortar while maintaining the relative relation between the rotational behavior of the upper mortar (periodic variation, rotation unevenness, and the like) and the rotational behavior of the lower mortar (periodic variation, rotation unevenness, and the like). An example is possible where n-times relation is maintained between the number of rotations of the lower mortar and the number of rotations of the upper mortar.

### [Preset Mode]

In the above-described examples, the number of rotations (including the rotating direction) of the upper mortar, the number of rotations (including the rotating direction) of the lower mortar, and the vertical gap need to be specified for each process. However, when these values are re-set in accordance with past optimum values, a preset mode can be conveniently used. For this purpose, the setting screen (for setting of basic items) depicted in FIG. 7 includes numerical keys(not depicted in the drawings) configured to input foodstuff type numbers corresponding to selected foodstuff types, a numerical display (not depicted in the drawings) configured to indicate the input foodstuff type numbers, a storage switch B1 and a read switch B2 (not depicted in the drawings) for the upper mortar, a storage switch C1 and a read switch C2 (not depicted in the drawings) for the lower mortar, and a storage switch D1 and a read switch D2 (not depicted in the drawings) for the gap. For example, when, for a certain foodstuff type (foodstuff type number 115), the current values (for example, the optimum values) of the number of rotations of the upper mortar, the number of rotations of the lower mortar, and the vertical gap are to be stored, the foodstuff type number "115" is input using the numerical keys and indicated on the numerical display. Furthermore, the storage switch B1 for the upper mortar, the storage switch C1 for the lower mortar, and the storage switch D 1 for the vertical gap are turned on. Then, the following are stored in corresponding nonvolatile storage areas on the data memory in the PLC: the values of the current number of rotations of the upper mortar, the current number of rotations of the lower mortar, and the vertical gap which values are present at the time of turn-on of the storage switches. At a later date when, for this foodstuff type, the number of rotations of the upper mortar, the number of rotations of the lower mortar, and the vertical gap are to be set to the respective previously stored optimum values, the foodstuff type number "115" is input using the numerical keys and indicated on the numerical display. Furthermore, the read switch B2 for the upper mortar, the read switch C2 for the lower mortar, and the read switch D 1 for the vertical gap are turned on. Then, number-of-rotations data for the upper mortar, number-of-rotations data for the lower mortar, and spacing data for the vertical gap are read from corresponding nonvolatile storage areas on the data memory in the PLC and set as the target number of rotations of the upper mortar, the target number of rotations of the lower mortar, and the target gap between the upper and lower mortars. Thus, the operator can easily perform operations of making settings to past optimum values. Software configured to provide such a preset mode function can be easily implemented by those skilled in the art. Thus, description with reference to a flowchart is omitted.

### [Variations]

A specific form of the ingredient foodstuff guide groove is not limited to the single vortical foodstuff guide groove 204c extending from the single outlet hole or each of the plurality of outlet holes 204b as depicted in FIG. 12 but may be a plurality of linear guide grooves 204c extending generally radially from a single outlet hole positioned in the center as depicted in FIG. 13.

A specific form of the filtration through-holes may be the filtration through-holes 201f each with a lanced piece formed on the inlet side thereof in association with the rotating direction as depicted in FIG. 14. Then, the ingredient foodstuffs are caught on the lanced pieces to promote the grinding effect and the effect of liquids passing through the through-holes.

Furthermore, as depicted in FIG. 15 and FIG. 16, the filtration through-holes 201d may be configured, by tapering the inner wall of each of the holes, so as to have a large diameter at an inlet-side opening and a small diameter at an outlet-side opening. That is, the filtration through-hole 201d has a large diameter at the inlet-side opening, which opens to the conical recessed surface 201a, as depicted in FIG. 15A, and a small diameter at the outlet-side opening, which opens to the conical protruding surface, as depicted in FIG. 15B. Thus, as depicted in FIG. 16, the inner wall of each of the filtration through-holes 201 d is tapered.

For the filtration through-holes 201 d with such a tapered inner wall, even when the inner diameter of outlet-side opening is the minimum diameter needed for the filtered foodstuffs to pass through the filtration through-holes 201d, the passing resistance at the outlet-side opening is very small. A squeezing effect is also exerted on the filtered foodstuffs flowing from the inlet-side opening to the outlet-side opening. Thus, advantageously, filtration efficiency for the softened foodstuffs is improved. Furthermore, since the inlet-side opening has a large diameter, the softened foodstuffs are likely to enter the inlet-side opening and to be caught inside the opening or to cut into the opening. As a result, the foodstuff grinding effect is advantageously improved.

In this example, as the tapered inner wall, a configuration is adopted in which the wall extends continuously from the inlet-side opening to the outlet-side opening. However, if it is difficult to process the hole so that the inner wall is tapered all along the length of the hole, the hole may be processed such that, from the inlet-side opening to a position immediately in front of the outlet-side opening, the inner diameter of the hole decreases gradually so as to taper the inner wall and such that, beyond the position immediately in front of the outlet-side opening, a cylindrical inner wall with a relatively small diameter is left as in the case of the conventional technique. The inventors have confirmed that even such a tapered inner wall is sufficiently effective compared to an inner wall corresponding to a hole with a diameter that is constant all along the length of the hole.

A configuration of the driving system is not limited to a belt driving scheme, but a gear driving scheme or another well-known driving scheme may be adopted. Furthermore, instead of associating a driving system with a driving source on a one-to-one basis, it is possible to associate one driving source with a plurality of driving systems by adopting an appropriate transmission mechanism or power distribution mechanism.

The conical protruding surface and/or conical recessed surface of the hold member 201 may include radially linear or vortical projections, projecting portions on scattered points, round projecting portions, wavy recesses and protrusions, or the like as needed for promoting the crushing and grinding of the ingredient foodstuff and discharge of the residues.

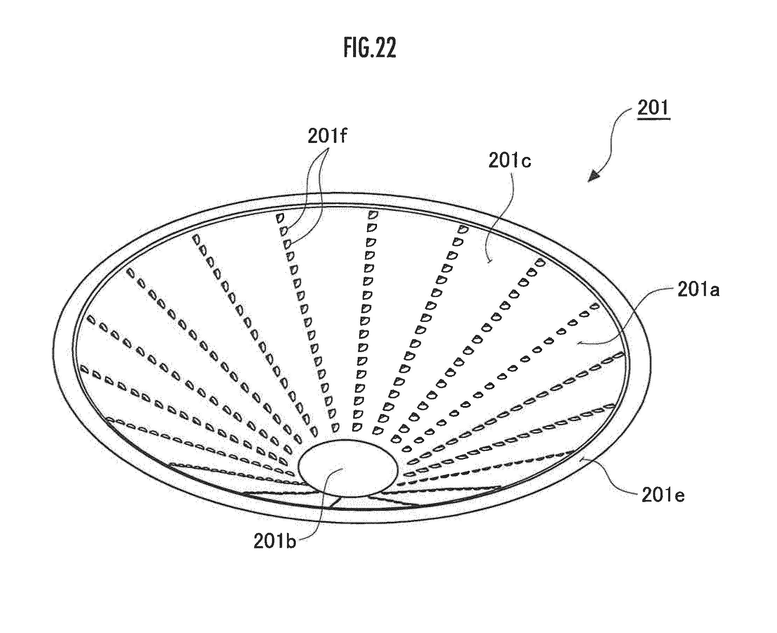

FIG. 17 and FIG. 18 depict an example of a hold member with radial grooves in a conical protruding surface. As depicted in FIG. 17 and FIG. 18, the conical protruding surface 204a of a hold member 204A is partitioned into a large number of radially extending small-width areas. Those of the small-width areas which are alternately adjacent to each other in the circumferential direction are shallowly cut so as to have an elliptic cross section (see FIG. 22), thus forming a large number of radially extending grooves 204j, and the areas sandwiched between the radial grooves 204j are flat surfaces. Thus, on the conical protruding surface 204a of the hold member 204A, the radial groves 204j and the radial flat surfaces are alternately present in the circumferential direction and thus provide continuous recesses and protrusions in the circumferential direction. The hold member 204A may be combined with, for example, the strainer member 201 with the flat conical recessed surface depicted in FIG. 4.

That is, for the hold member 204A with such a recessed and protruding structure on the conical protruding surface 204a, the softened foodstuffs introduced into the gap between the conical protruding surface 204a of the hold member and the conical recessed surface 201a of the strainer member via the inlet hole 204e and the three outlet holes 204b are further guided to and moved through the foodstuff guide grooves 204c, while being approximately evenly distributed to the radial grooves 204j by a centrifugal force. The softened foodstuffs are carried outward in the radial direction along the radial groves 204j, while being ground by the relative rotation between the conical protruding surface 204a and the conical recessed surface 201a (see FIG. 4). Consequently, liquids are extracted from the foodstuffs and subjected to the solid-liquid separation effect of the strainer member. At this time, the radial grooves 204j not only guide the softened foodstuffs outward in the radial direction but also regulate the circumferential movement of the softened foodstuffs to some degree. This also advantageously promotes the grinding effect based on the relative rotation between the conical protruding surface 204a and the conical recessed surface 201 a.

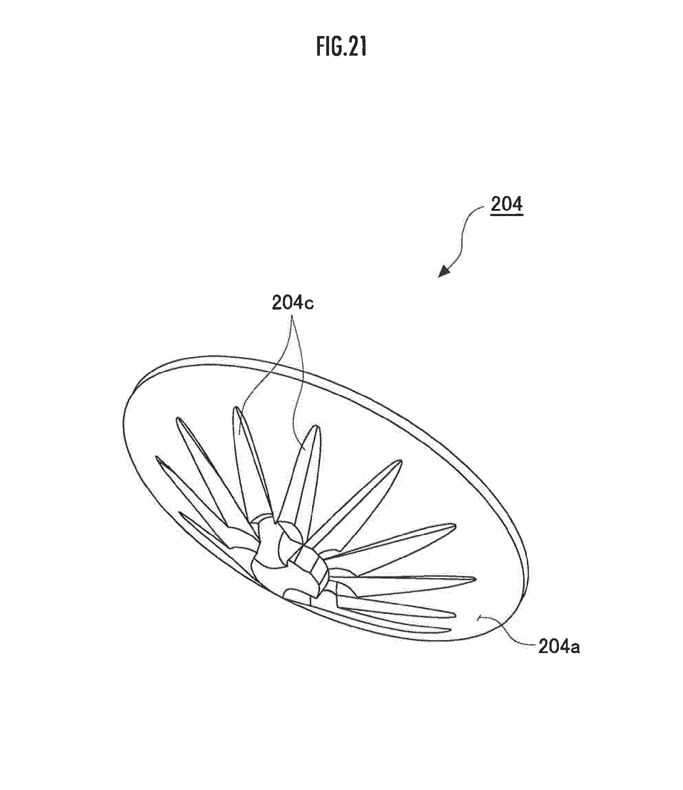

FIGs 19 to 22 depict an example of a strainer member with radial grooves in a conical recessed surface. As depicted in FIGs 19 to 22, the conical recessed surface 201a of a strainer member 201A is partitioned into a large number of radially extending small-width areas. Those of the small-width areas which are alternately adjacent to each other in the circumferential direction are shallowly cut so as to have an elliptic cross section, thus forming a large number of radially extending grooves 201f, and the areas sandwiched between the radial grooves 201f are flat surfaces 201g (see FIG. 22). Thus, on the conical recessed surface 201a of the strainer member 201A, the radial groves 201f and the radial flat surfaces 201g are alternately present in the circumferential direction and thus provide continuous recesses and protrusions in the circumferential direction (see FIG. 21). The strainer member 201A may be combined with, for example, the hold member 204 with the flat conical protruding surface depicted in FIG. 5.

That is, for the strainer member 201A with such a recessed and protruding structure on the conical recessed surface 201 a, the softened foodstuffs introduced into the gap between the conical protruding surface 204a of the hold member (see FIG. 5) and the conical recessed surface 201a of the strainer member via the inlet hole 204e and the three outlet holes 204b are further guided to and moved through the foodstuff guide grooves 204c, while being approximately evenly distributed to the radial grooves 201 f by a centrifugal force. The softened foodstuffs are carried outward in the radial direction along the radial groves 201 f, while being ground by the relative rotation between the conical protruding surface 204a and the conical recessed surface 201 a. Consequently, liquids are extracted from the foodstuffs and subjected to the solid-liquid separation effect of the strainer member. At this time, the radial grooves 201 f not only guide the softened foodstuffs outward in the radial direction but also regulate the circumferential movement of the softened foodstuffs to some degree. This also advantageously promotes the grinding effect based on the relative rotation between the conical protruding surface 204a and the conical recessed surface 201 a.

The above description discloses the combined use of the hold member with the radial grooves (204A in FIG. 17) and the strainer member with no radial grooves (201 in FIG. 4), and the combined use of the hold member with no radial grooves (204 in FIG. 5) and the strainer member with radial grooves (201A in FIG. 19). However, of course, the combined use of a hold member with radial grooves (204A in FIG. 17) and a strainer member with radial grooves (201A in FIG. 19) is more effective.

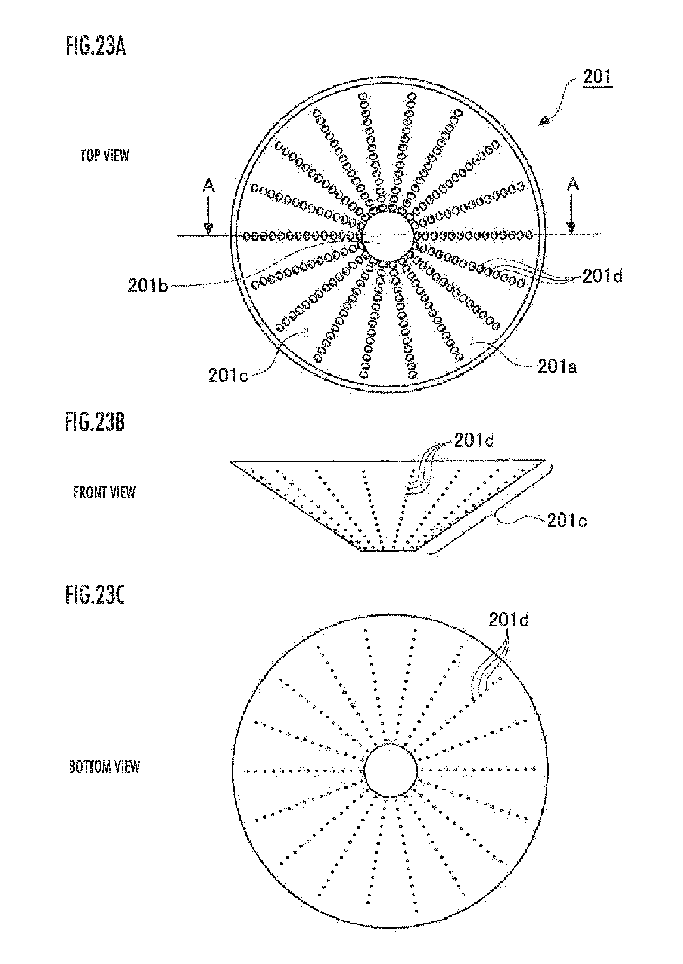

Now, a further improved combination of a hold member 204B and a strainer member 201B will be described with reference to FIGs 23 to 29.

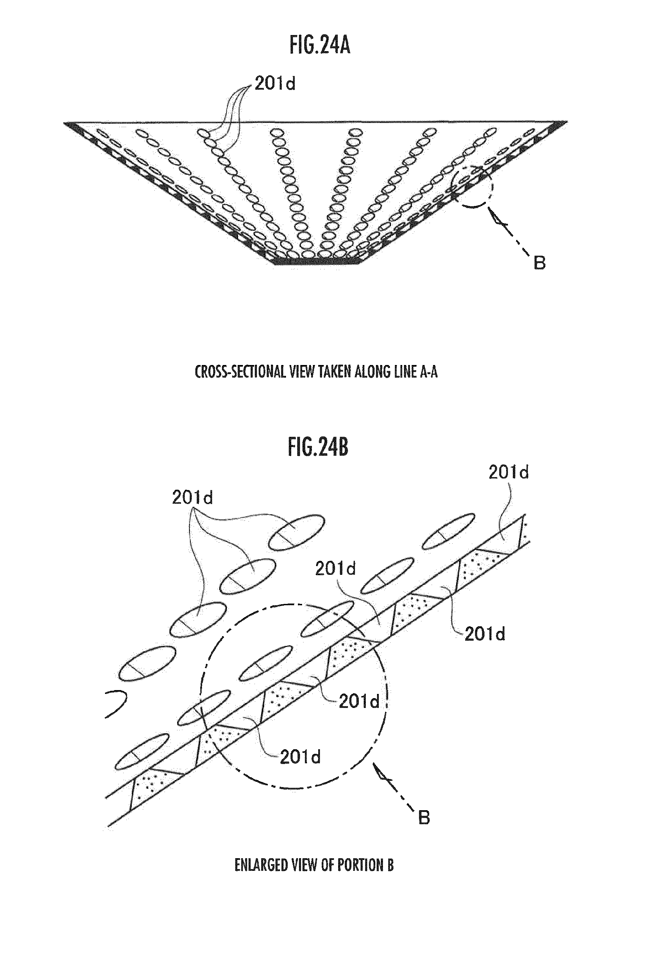

The hold member 204B with a scraper unit on a conical protruding surface at an upper-edge outer periphery thereof will be described with reference to FIG. 23 and FIG. 24. The same components in FIG. 23 and FIG. 24 as the corresponding components in FIG. 17 and FIG. 18 are denoted by the same reference numerals and will thus not be described below. As depicted in FIGs 23B and 23C, in the hold member 204B, scraper units 204k are disposed around the upper-edge outer periphery of the conical protruding surface 204a at four positions at intervals of 90 degrees. Each of the scraper units 204k includes an inclined surface opposite to the rotating direction to scoop up, remove, and scrape out residues described below, during relative rotation with the strainer unit 201B.

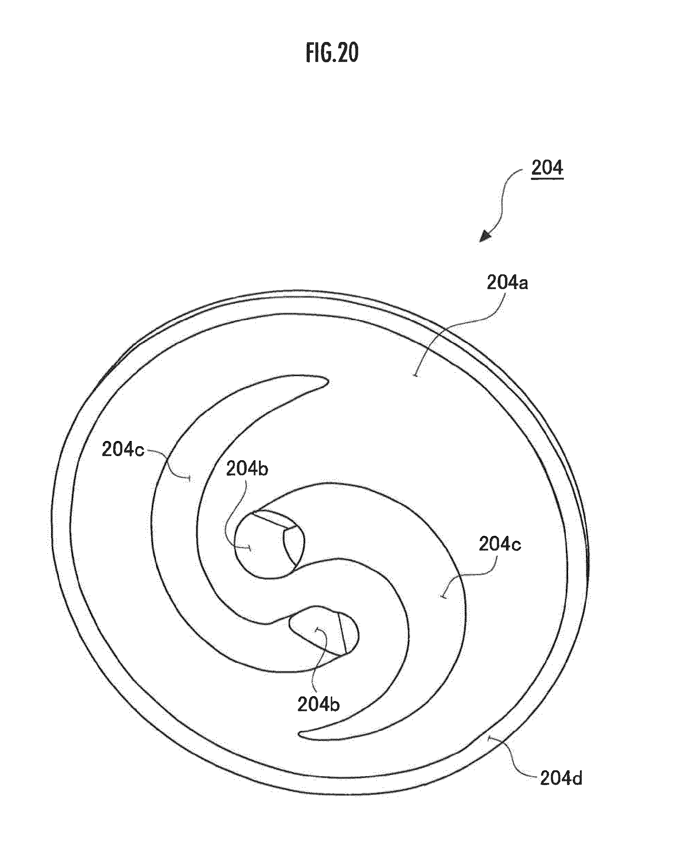

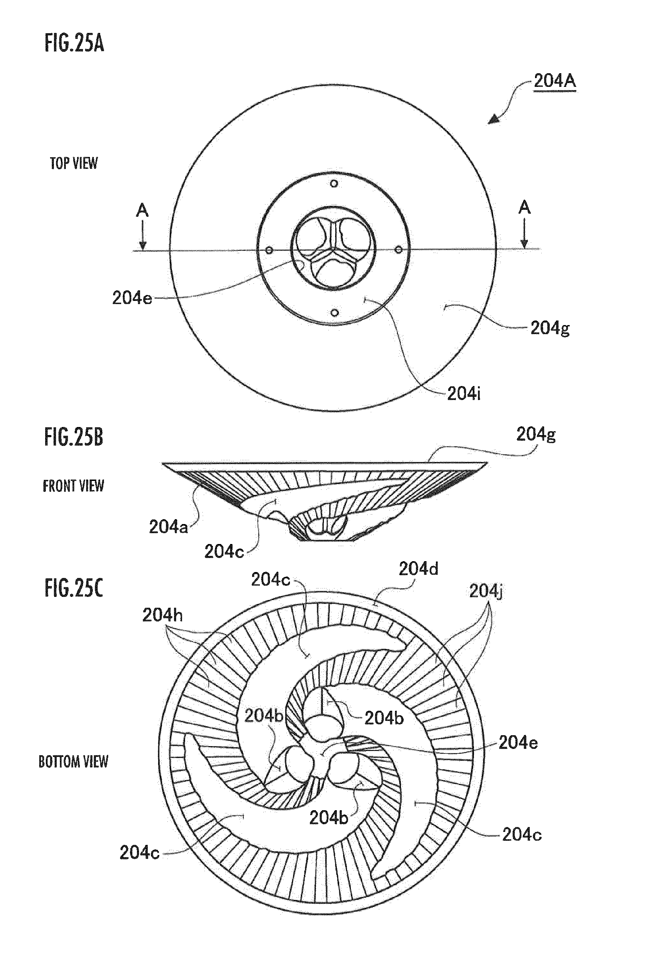

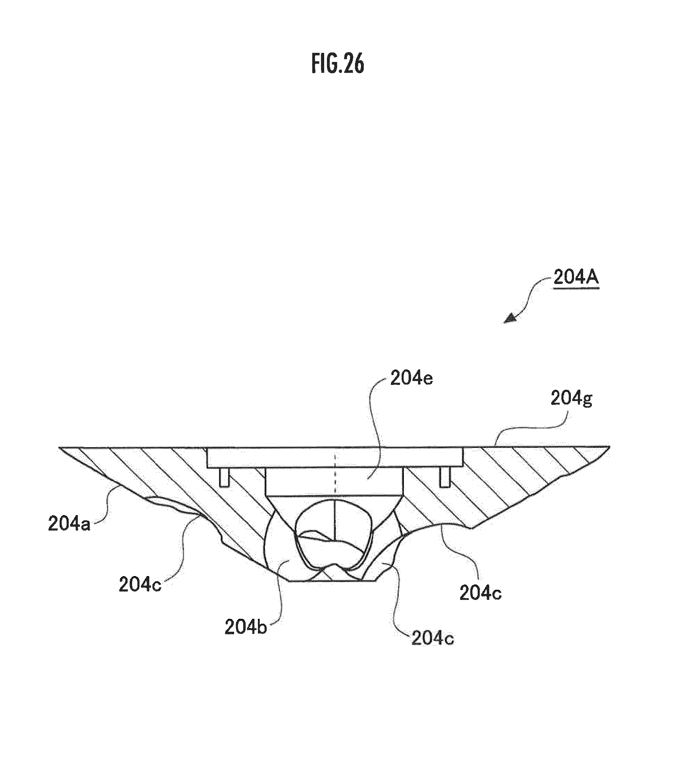

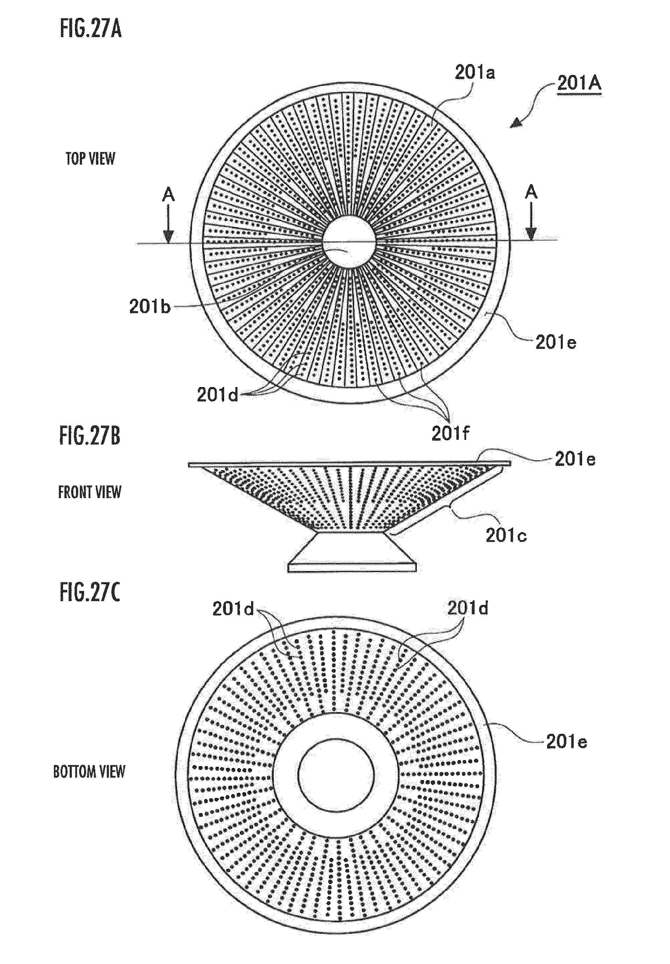

The strainer member 201B with an annular auxiliary strainer unit around an upper periphery of a conical recessed portion will be described with reference to FIG. 25 and FIG. 26. The same components in FIG. 25 and FIG. 26 as the corresponding components in FIG. 19 and FIG. 20 are denoted by the same reference numerals and will thus not be described below. It should be noted that, to avoid complicating the drawings, illustration of filtration through-holes arranged on the inclined surface 201c is omitted from FIG. 25 and FIG. 26. As depicted in FIGs 25A and 25B, the strainer member 201B includes an annular auxiliary strainer unit 201i around the upper periphery of the conical recessed portion 201a. As depicted in FIG. 27, the annular auxiliary strainer unit 201i includes an annular vertical wall provided so as to surround an upper edge of a conical inclined surface 201c and has a large number of filtration through-holes 201d arranged on the annular vertical wall to function as an auxiliary strainer. An annular horizontal unit 201h is provided between the annular auxiliary strainer unit 201i and the conical inclined surface 201c. As described below, the annular horizontal unit 201h is configured such that residues discharged by the solid-liquid separation effect of the conical recessed surface 201a are deposited on the annular horizontal unit 201h.

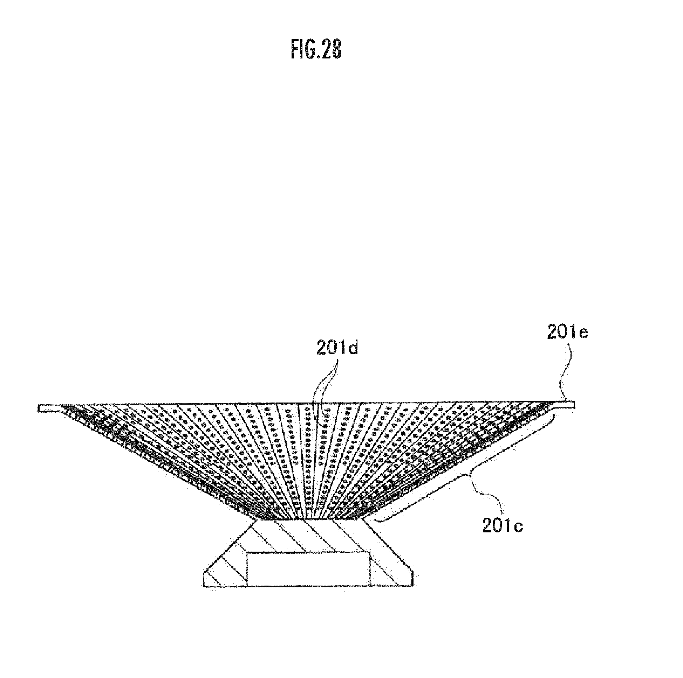

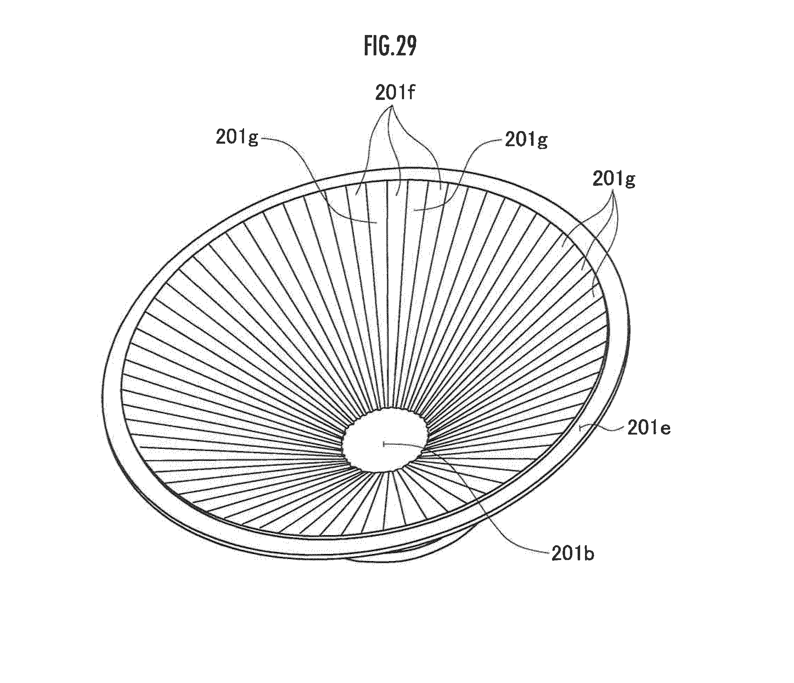

FIG. 28 and FIG. 29 depict that the hold member 204B and the strainer member 201B are assembled together. As is apparent from FIG. 28 and FIG. 29, with the hold member 204B coaxially overlapping the strainer member 201B with an appropriate gap between the hold member 204B and the strainer member 201B, both the hold member 204B and the strainer member 201B are rotated, for example, in the same direction so as to produce a relative speed difference. Then, as described above, softened foodstuffs fed to the gap between the conical protruding surface 204a of the hold member 204B and the conical recessed surface 201a of the strainer member 201B are ground due to the relative speed difference between the conical protruding surface 204a and the conical recessed surface 201a. Liquids are extracted or squeezed out from the softened foodstuffs. The liquids thus obtained are placed on the inclined surface 201c of the strainer member 201B and drawn out through the filtration through-holes 201 d. On the other hand, the residues still containing a slight amount of liquids are raised along the inclined surface 201c of the strainer member 201B by a centrifugal force. The residues are finally ejected onto the annular horizontal unit 201h through the upper periphery of the strainer member 201a (see FIG. 27). The residues ejected onto the annular horizontal unit 201h and containing the liquids are further deposited on an inner peripheral surface of the annular auxiliary strainer unit 201i, while being pressed against the inner peripheral surface of the annular auxiliary strainer unit 201i by a centrifugal force. The liquids contained in the residues are ejected to the exterior through the large number of filtration through-holes 201d arranged in the annular auxiliary strainer unit 201 i. On the other hand, the residues deposited on the annular horizontal unit 201h are periodically scooped up by the four scraper units 204k disposed around the upper periphery of the hold member 204B. The residues are then ejected to the exterior beyond the annular auxiliary strainer unit 201i.

Thus, the combined use of the hold member 204B and strainer member 201B having the novel structure allows liquids to be extracted from the softened foodstuffs fed to the gap between the hold member 204B and the strainer member 201B, not only through the filtration through-holes 201 d arranged on the inclined surface 201c of the strainer member but also through filtration through-holes 201 di arranged on the annular auxiliary strainer unit 201 i. This further enhances liquid extraction efficiency.

The hold member 204 is not limited to a solid component but may adopt a configuration in which a metal plate (for example, a stainless steel plate) shaped to have a conical protruding surface by means of pressing is reinforced by a rib structure from behind, as long as the configuration enables the form of a rigid pressing surface or foodstuff guide passage to be maintained. In that case, the ingredient foodstuff supply passage may be formed of a pipe material.

### Industrial Applicability

In the method for operating a food mill according to the present invention, supplied ingredient foodstuffs (for example, foodstuffs heated and softened using superheated vapor) are pushed into the gap between the upper mortar and the lower mortar in such a manner as to be sucked into the gap. The ingredient foodstuffs are then crushed by a shearing force which depends on the difference in speed between the upper and lower mortars, while being separated into filtered foodstuffs (puree) and residues (including coats and seeds) by means of the solid-liquid separation effect of the lower mortar resulting from a centrifugal force which depends on the rotation speed of the lower mortar. Finally, the filtered foodstuffs and the residues are guided into the filtered foodstuff collection unit and the residue collection unit, respectively. At this time, variation which depends on the nature of ingredient foodstuffs (for example, density, hardness, water content, viscosity, and the amount of seeds or coats) is absorbed to some degree by adjusting the difference in speed between the upper and lower mortars or the rotation speed of the lower mortar. Thus, high-quality filtered foodstuffs (puree) can be stably manufactured from ingredient foodstuffs with various types of nature.

In the automatic food milling apparatus according to the present invention, when the predetermined operation is performed via the operation unit to specify the target rotating direction and the target rotation speed for the upper mortar, the target rotating direction and the target rotation speed for the lower mortar, and the target gap between the upper and lower mortars, the control unit operates to activate the driving mechanism to automatically set the rotating direction and rotation speed of the upper mortar, the rotating direction and rotation speed of the lower mortar, and the gap between the upper and lower mortars to the respective specified contents. Thus, such a function is utilized to execute the following process. A difference is caused in rotation speed between the upper and lower mortars to allow the ingredient foodstuffs to be crushed by a shearing force generated between the upper and lower mortars, and the conical recessed surface of the lower mortar is utilized to allow the crushed ingredient foodstuffs to be separated into filtered foodstuffs and residues by a centrifugal force resulting from rotation of the lower mortar so that the filtered foodstuffs and the residues can be collected in the filtered foodstuff collection unit and the residue collection unit, respectively.

Moreover, in the automatic food milling apparatus, the rotational behaviors of the upper and lower mortars and the gap between the upper and lower mortars can be optionally set, and thus, attempts may be freely made to perform various operation aspects, such as an operation of keeping one of the upper and lower mortars stationary, while rotating only the other mortar, an operation of rotating the upper mortar and the lower mortar in the opposite directions, an operation of increasing the rotation speed of one or both of the upper and lower mortars to a maximum speed, an operation of gradually increasing the difference in speed between the upper and lower mortars from zero, and an operation of gradually increasing the gap between the upper and lower mortars from zero. This can be utilized to easily perform, for example, a tuning operation for finding an optimum operation state and an operation dealing with blockage of the gap between the upper and lower mortars with the ingredient foodstuffs or clogging of the filtration holes. Reference Signs List

- 1: Frame
- 2: Food milling processing section
- 3: Bearing support mechanism
- 4: Driving system (for rotation of lower mortar)
- 5: Driving system (for rotation of upper mortar)
- 6: Driving system (for elevation and lowering of upper mortar)
- 7: Operation unit
- 8: Control unit
- 10: Automatic food milling apparatus
- 201: Lower mortar
- 201a: Bottom surface (conical recessed surface)
- 201b: Circular central area
- 201c: Inclined surface
- 201d: Filtration through-hole
- 201e: Peripheral portion
- 202: Shaft
- 203: Bearing
- 204: Upper mortar
- 204a: Bottom surface (conical protruding surface)
- 204b: Outlet hole
- 204c: Foodstuff guide groove
- 204d: Peripheral portion
- 204e: Inlet hole
- 205: Ingredient foodstuff supply pipe
- 206: Bearing
- 207: Filtered foodstuff collection tank
- 207a: Filtered foodstuff discharge pipe
- 208: Residue collection tank
- 208a: Residue discharge port
- 209: Supporting strut
- 301: Platform
- 302: Guide rod
- 303: Guide sleeve
- 304: Supporting stand
- 401: First servo motor
- 402: Timing belt
- 403: Driven pulley
- 501: Second servo motor
- 502: Driving pulley
- 503: Timing belt
- 504: Driven pulley
- 601: Fixture
- 602: Third servo motor
- 603: Ball screw shaft
- 701: Sliding operation element (for setting of target number of rotations for upper motor)
- 702: Sliding operation element (for setting of target number of rotations for lower motor)
- 703: Sliding operation element (for setting of target gap between upper and lower mortars)
- 704: Numerical display (for display of target number of rotations of upper mortar)
- 705: Numerical display (for display of target number of rotations of lower mortar)
- 706: Numerical display (for display of target gap)
- 707: Numerical display (for display of current number of rotations of upper mortar)
- 708: Numerical display (for display of current number of rotations of lower mortar)
- 709: Numerical display (for display of current gap)
- 710: Numerical display (for display of current load on upper mortar)
- 711: Numerical display (for display of current load on lower mortar)
- 712: Illuminated pushbutton (for setting of rotation unevenness option for upper mortar)
- 713: Illuminated pushbutton (for setting of rotation unevenness option for lower mortar)
- 714: Illuminated pushbutton (for setting of periodic change option for upper mortar)
- 715: Illuminated pushbutton (for setting of periodic change option for lower mortar)
- 716: Illuminated pushbutton (for setting of load following option for upper mortar)
- 717: Illuminated pushbutton (for setting of load following option for lower mortar)
- 718: Illuminated pushbutton (for setting of load following option for gap between upper and lower mortars)
- A: Arrow indicative of elevating and lowering direction
- P: Residues
- Q: Filtered foodstuffs
- R: Ingredient foodstuffs

## Claims

1. A method for operating a food mill comprising:
a lower mortar which is supported so as to be rotatable around a conical central axis in both a forward direction and a backward direction with a conical recessed surface thereof facing upward, the conical recessed surface serving as a filtration surface; and
an upper mortar which is supported so as to be rotatable around a conical central axis in both the forward direction and the backward direction with a conical protruding surface thereof facing downward, the conical protruding surface serving as a pressing surface,
the lower mortar and the upper mortar being supported such that the conical recessed surface and the conical protruding surface lie opposing each other in a vertical direction via a gap with the conical central axes of the lower and upper mortars coaxially aligned with each other, and such that the lower mortar and the upper mortar freely approach and leave each other so as to contract or enlarge the gap, the food mill further comprising:
a foodstuff supply passage through which ingredient foodstuffs are fed to the gap between the conical recessed surface of the lower mortar and the conical protruding surface of the upper mortar;
a filtered foodstuff collection unit which collects filtered foodstuffs passing through the conical recessed surface of the lower mortar; and
a residue collection unit which collects residues rising along the conical recessed surface of the lower mortar and overflowing the conical recessed surface through an upper-end periphery thereof,
wherein the method comprises causing a difference in rotation speed between the upper mortar and the lower mortar to allow the ingredient foodstuffs to be crushed or ground by a shearing force generated between the upper mortar and the lower mortar, and utilizing the conical recessed surface of the lower mortar to allow the crushed ingredient foodstuffs to be separated into the filtered foodstuffs and the residues by a centrifugal force resulting from rotation of the lower mortar so that the filtered foodstuffs and the residues are collected in the filtered foodstuff collection unit and the residue collection unit, respectively.

2. The method for operating the food mill according to Claim 1, wherein the difference in rotation speed is periodically changed.

3. The method for operating the food mill according to Claim 2, wherein the periodic change in rotation speed is effected within a given range around a zero difference in rotation speed between the upper and lower mortars, in both a forward direction and a backward direction.

4. The method for operating the food mill according to Claim 1, wherein pulsed rotation unevenness is applied to rotation of the lower mortar and/or the upper mortar.

5. The method for operating the food mill according to Claim 1, wherein the gap between the upper and lower mortars is periodically changed.

6. The method for operating the food mill according to Claim 1, wherein the gap between the upper and lower mortars is changed in accordance with a rotational load on the lower mortar or the upper mortar.

7. The method for operating the food mill according to Claim 1, wherein the rotation speed of the lower mortar or the upper mortar is changed in accordance with a rotational load on the lower mortar or the upper mortar.

8. The method for operating the food mill according to any of Claims 1 to 7, wherein a filtration through-hole formed in the filtration surface of the lower mortar comprises a tapered inner wall with a large diameter on an inlet side and a small diameter on an outlet side.

9. The method for operating the food mill according to any of Claims 1 to 7, wherein at least one of the conical protruding surface of the upper mortar and the conical recessed surface of the lower mortar comprises a radial groove.

10. An automatic food milling apparatus comprising:
a lower mortar which is supported so as to be rotatable around a conical central axis in both a forward direction and a backward direction with a conical recessed surface thereof facing upward, the conical recessed surface serving as a filtration surface; and
an upper mortar which is supported so as to be rotatable around a conical central axis in both the forward direction and the backward direction with a conical protruding surface thereof facing downward, the conical protruding surface serving as a pressing surface,
the lower mortar and the upper mortar being supported such that the conical recessed surface and the conical protruding surface lie opposing each other in a vertical direction via a gap with the conical central axes of the lower and upper mortars coaxially aligned with each other, and such that the lower mortar and the upper mortar freely approach and leave each other so as to contract or enlarge the gap, the automatic food milling apparatus further comprising:
a foodstuff supply passage through which ingredient foodstuffs are fed to the gap between the conical recessed surface of the lower mortar and the conical protruding surface of the upper mortar;
a filtered foodstuff collection unit which collects filtered foodstuffs passing through the conical recessed surface of the lower mortar;
a residue collection unit which collects residues rising along the conical recessed surface of the lower mortar and overflowing the conical recessed surface through an upper-end periphery thereof;
a driving mechanism which includes at least one or two driving sources and which drives rotational movement of the lower mortar, rotational movement of the upper mortar, and approaching and leaving movements of the upper and lower mortars across the gap;
an operation unit; and
a control unit which controls the driving mechanism in response to a predetermined operation performed via the operation unit,
wherein the control unit incorporates a control function to control the driving mechanism to adjust rotation of the lower mortar and the upper mortar and the gap between the upper and lower mortars to a rotating direction, a rotation speed, and the gap specified by a predetermined operation performed via the operation unit.

11. The automatic food milling apparatus according to Claim 10, wherein the control unit further incorporates a function to control the driving mechanism to periodically change a difference in rotation speed between the upper mortar and the lower mortar..

12. The automatic food milling apparatus according to Claim 11, wherein the change in the difference in the rotation speed is effected within a given range around a zero difference in rotation speed between the upper and lower mortars, in both a forward direction and a backward direction.

13. The automatic food milling apparatus according to Claim 10, wherein the control unit further incorporates a function to control the driving mechanism to apply pulsed rotation unevenness to rotation of the lower mortar and/or the upper mortar.

14. The automatic food milling apparatus according to Claim 10, wherein the control unit further incorporates a function to control the driving mechanism to periodically change the gap between the upper and lower mortars.

15. The automatic food milling apparatus according to Claim 10, wherein the control unit further incorporates a function to control the driving mechanism to change the gap between the upper and lower mortars in accordance with a rotational load on the lower mortar and/or the upper mortar.

16. The automatic food milling apparatus according to Claim 10, wherein the control unit further incorporates a function to control the driving mechanism to change the rotation speed of the lower mortar and/or the upper mortar in accordance with a rotational load on the lower mortar and/or the upper mortar.

17. The automatic food milling apparatus according to Claim 10, wherein the control unit further incorporates a function to automatically specify a number of rotations for the upper mortar in response to an operation performed via the operation unit to specify a number of rotations of the lower mortar, so as to maintain a predefined correlation between a rotational behavior of the lower mortar and a rotational behavior of the upper mortar.

18. The automatic food milling apparatus according to Claim 17, wherein the predefined correlation is a constant difference in the number of rotations between the lower mortar and the upper mortar.

19. The automatic food milling apparatus according to Claim 10, wherein the control unit further incorporates a function to store current specified values for the rotating direction and number of rotations of the upper mortar and/or lower mortar speed and/or a current specified value for the gap between the upper and lower mortars in a predetermined memory in accordance with a predetermined storage operation performed via the operation unit, and a function to read stored values for the rotating direction and number of rotations of the upper mortar and/or lower mortar speed and/or a stored value for the gap between the upper and lower mortars from the predetermined memory and set the read values as specified values in accordance with a predetermined read operation performed via the operation unit.

20. The automatic food milling apparatus according to Claim 19, wherein the storage in the memory and the reading from the memory for setting are enabled for each foodstuff type used.

21. The automatic food milling apparatus according to any one of Claims 10 to 20, wherein the operation unit comprises three analog operation elements corresponding to the lower mortar, the upper mortar, and the gap between the upper and lower mortars, respectively, so that specification of the rotating direction and the rotation speed and specification of the gap are performed via operation of the corresponding analog operation elements.

22. The automatic food milling apparatus according to any one of Claims 10 to 20, wherein the operation unit comprises three digital displays corresponding to the lower mortar, the upper mortar, and the gap between the upper and lower mortars, respectively, so that checking of a current rotating direction and rotation speed and the current gap is performed via the corresponding digital displays.

23. The automatic food milling apparatus according to any of Claims 10 to 20, wherein a filtration through-hole formed in the filtration surface of the lower mortar comprises a tapered inner wall with a large diameter on an inlet side and a small diameter on an outlet side.

24. The automatic food milling apparatus according to any of Claims 10 to 20, wherein at least one of the conical protruding surface of the upper mortar and the conical recessed surface of the lower mortar comprises a radial groove.

## Amended claims

### Amended claims under Art. 19.1 PCT

**1.** (Amended) A method for operating a food mill comprising:
a lower mortar which is supported so as to be rotatable around a conical central axis with a conical recessed surface thereof facing upward, the conical recessed surface serving as a filtration surface; and
an upper mortar which is supported so as to be rotatable around a conical central axis with a conical protruding surface thereof facing downward, the conical protruding surface serving as a pressing surface,
the lower mortar and the upper mortar being supported such that the conical recessed surface and the conical protruding surface lie opposing each other in a vertical direction via a gap with the conical central axes of the lower and upper mortars coaxially aligned with each other, the food mill further comprising:
a foodstuff supply passage through which ingredient foodstuffs are fed to the gap between the conical recessed surface of the lower mortar and the conical protruding surface of the upper mortar;
a filtered foodstuff collection unit which collects filtered foodstuffs passing through the conical recessed surface of the lower mortar; and
a residue collection unit which collects residues rising along the conical recessed surface of the lower mortar and overflowing the conical recessed surface through an upper-end periphery thereof,
wherein the method comprises causing a difference in rotation speed between the upper mortar and the lower mortar to allow the ingredient foodstuffs to be crushed or ground by a shearing force generated between the upper mortar and the lower mortar, and utilizing the conical recessed surface of the lower mortar to allow the crushed ingredient foodstuffs to be separated into the filtered foodstuffs and the residues by a centrifugal force resulting from rotation of the lower mortar so that the filtered foodstuffs and the residues are collected in the filtered foodstuff collection unit and the residue collection unit, respectively.

**2.** The method for operating the food mill according to Claim 1, wherein the difference in rotation speed is periodically changed.

**3.** The method for operating the food mill according to Claim 2, wherein the periodic change in rotation speed is effected within a given range around a zero difference in rotation speed between the upper and lower mortars, in both a forward direction and a backward direction.

**4.** The method for operating the food mill according to Claim 1, wherein pulsed rotation unevenness is applied to rotation of the lower mortar and/or the upper mortar.

**5.** (Amended) The method for operating the food mill according to Claim 1, wherein the lower mortar and the upper mortar are supported so as to freely approach or leave each other to contract or enlarge the vertical gap between the lower mortar and the upper mortar, and the gap between the upper and lower mortars is periodically changed.

**6.** (Amended) The method for operating the food mill according to Claim 1, wherein the lower mortar and the upper mortar are supported so as to freely approach or leave each other to contract or enlarge the vertical gap between the lower mortar and the upper mortar, and the gap between the upper and lower mortars is changed in accordance with a rotational load on the lower mortar or the upper mortar.

**7.** The method for operating the food mill according to Claim 1, wherein the rotation speed of the lower mortar or the upper mortar is changed in accordance with a rotational load on the lower mortar or the upper mortar.

**8.** The method for operating the food mill according to any of Claims 1 to 7, wherein a filtration through-hole formed in the filtration surface of the lower mortar comprises a tapered inner wall with a large diameter on an inlet side and a small diameter on an outlet side.

**9.** The method for operating the food mill according to any of Claims 1 to 7, wherein at least one of the conical protruding surface of the upper mortar and the conical recessed surface of the lower mortar comprises a radial groove.

**10.** (Amended) An automatic food milling apparatus comprising:
a lower mortar which is supported so as to be rotatable around a conical central axis with a conical recessed surface thereof facing upward, the conical recessed surface serving as a filtration surface; and
an upper mortar which is supported so as to be rotatable around a conical central axis with a conical protruding surface thereof facing downward, the conical protruding surface serving as a pressing surface,
the lower mortar and the upper mortar being supported such that the conical recessed surface and the conical protruding surface lie opposing each other in a vertical direction via a gap with the conical central axes of the lower and upper mortars coaxially aligned with each other, the automatic food milling apparatus further comprising:
a foodstuff supply passage through which ingredient foodstuffs are fed to the gap between the conical recessed surface of the lower mortar and the conical protruding surface of the upper mortar;
a filtered foodstuff collection unit which collects filtered foodstuffs passing through the conical recessed surface of the lower mortar;
a residue collection unit which collects residues rising along the conical recessed surface of the lower mortar and overflowing the conical recessed surface through an upper-end periphery thereof;
a driving mechanism which includes at least one or two driving sources and which drives rotational movement of the lower mortar, or rotational movement of the upper mortar;
an operation unit; and
a control unit which controls the driving mechanism in response to a predetermined operation performed via the operation unit,
wherein the control unit incorporates a control function to control the driving mechanism to adjust rotation of the lower mortar and the upper mortar to a rotation speed specified by a predetermined operation performed via the operation unit.

**11.** The automatic food milling apparatus according to Claim 10, wherein the control unit further incorporates a function to control the driving mechanism to periodically change a difference in rotation speed between the upper mortar and the lower mortar.

**12.** The automatic food milling apparatus according to Claim 11, wherein the change in the difference in the rotation speed is effected within a given range around a zero difference in rotation speed between the upper and lower mortars, in both a forward direction and a backward direction.

**13.** The automatic food milling apparatus according to Claim 10, wherein the control unit further incorporates a function to control the driving mechanism to apply pulsed rotation unevenness to rotation of the lower mortar and/or the upper mortar.

**14.** (Amended) The automatic food milling apparatus according to any one of Claims 10 to 13, wherein the lower mortar and the upper mortar are supported so as to freely approach or leave each other to contract or enlarge the vertical gap between the lower mortar and the upper mortar,
the driving mechanism further drives approaching and leaving movements of the upper and lower mortars across the gap,
the control unit further incorporates a function to control the driving mechanism to adjust the gap between the upper mortar and the lower mortar to a gap specified by a predetermined operation performed via the operation unit and to control the driving mechanism to periodically change the gap between the upper and lower mortars.

**15.** (Amended) The automatic food milling apparatus according to Claim 10, wherein the lower mortar and the upper mortar are supported so as to freely approach or leave each other to contract or enlarge the vertical gap between the lower mortar and the upper mortar,
the driving mechanism further drives approaching and leaving movements of the upper and lower mortars across the gap, and
the control unit further incorporates a function to control the driving mechanism to adjust the gap between the upper mortar and the lower mortar to a gap specified by a predetermined operation performed via the operation unit and to change the gap between the upper and lower mortars in accordance with the rotational load on the lower mortar and/or the upper mortar.

**16.** The automatic food milling apparatus according to Claim 10, wherein the control unit further incorporates a function to control the driving mechanism to change the rotation speed of the lower mortar and/or the upper mortar in accordance with a rotational load on the lower mortar and/or the upper mortar.

**17.** (Amended) The automatic food milling apparatus according to Claim 10, wherein the control unit further incorporates a function to automatically specify a rotation speed for the upper mortar in response to an operation performed via the operation unit to specify a rotation speed of the lower mortar, so as to maintain a predefined correlation between a rotational behavior of the lower mortar and a rotational behavior of the upper mortar.

**18.** (Amended) The automatic food milling apparatus according to Claim 17, wherein the predefined correlation is a constant difference in the rotation speeds between the lower mortar and the upper mortar.

**19.** (Amended) The automatic food milling apparatus according to Claim 10, wherein the lower mortar and the upper mortar are supported so as to freely approach or leave each other to contract or enlarge the vertical gap between the lower mortar and the upper mortar,
the driving mechanism further drives approaching and leaving movements of the upper and lower mortars across the gap, and
the control unit further incorporates a function to control the driving mechanism to adjust the gap between the upper mortar and the lower mortar to a gap specified by a predetermined operation performed via the operation unit and
to store current specified values for the rotation speeds of the upper mortar and/or lower mortar and/or a current specified value for the gap between the upper and lower mortars in a predetermined memory in accordance with a predetermined storage operation performed via the operation unit, and a function to read stored values for the rotation speeds of the upper mortar and/or lower mortar and/or a stored value for the gap between the upper and lower mortars from the predetermined memory and set the read values as specified values in accordance with a predetermined read operation performed via the operation unit.

**20.** The automatic food milling apparatus according to Claim 19, wherein the storage in the memory and the reading from the memory for setting are enabled for each foodstuff type used.

**21.** (Amended) The automatic food milling apparatus according to any one of Claims 10 to 20, wherein the operation unit comprises at least two analog operation elements corresponding to the lower mortar and the upper mortar, respectively, and specification of the rotation speed is performed via operation of the corresponding analog operation element.

**22.** (Amended) The automatic food milling apparatus according to any one of Claims 10 to 20, wherein the operation unit comprises at least two digital displays corresponding to the lower mortar and the upper mortar, respectively, so that checking of a current rotation speed is performed via the corresponding digital displays.

**23.** The automatic food milling apparatus according to any of Claims 10 to 22, wherein a filtration through-hole formed in the filtration surface of the lower mortar comprises a tapered inner wall with a large diameter on an inlet side and a small diameter on an outlet side.

**24.** The automatic food milling apparatus according to any of Claims 10 to 22, wherein at least one of the conical protruding surface of the upper mortar and the conical recessed surface of the lower mortar comprises a radial groove.
